# EUROPEAN PATENT APPLICATION

(11) **EP 4 734 485 A1**
(43) Date of publication of application: **29.04.2026**
(21) Application number: 24826070.5
(22) Date of filing: 13.03.2024
(51) Int. Cl.: H04L 67/12, H04L 67/50, G06F 8/65, H04L 43/20, H04L 41/0663, B60R 16/023

(54) **SIGNAL PROCESSING DEVICE AND VEHICLE DISPLAY DEVICE COMPRISING SAME**

(30) Priority: 23.06.2023 KR 20230081051
(71) Applicant: LG Electronics Inc., Yeongdeungpo-gu Seoul 07336 (KR)
(72) Inventor: LEE, Chulhee, Seoul 06772 (KR); JUNG, Junyoung, Seoul 06772 (KR); LEE, Eunkoo, Seoul 06772 (KR); LEE, Dongkyu, Seoul 06772 (KR); YOON, Taesuk, Seoul 06772 (KR)
(74) Representative: Vossius & Partner Patentanwälte Rechtsanwälte mbB
(86) International application number: PCT/KR2024/003195
(87) International publication number: WO 2024/262745

(57) **Abstract**

An embodiment of the present disclosure provides a signal processing device and a vehicle display apparatus including the same. The signal processing device includes a processor configured to execute a core orchestrator and a vehicle orchestrator, wherein the processor is configured to execute at least one application based on a container runtime, and the vehicle orchestrator is configured to perform monitoring and management of applications, microservices, and device resources based on communication with the core orchestrator. Accordingly, it is possible to perform mixed operation of microservices.

## Description

### BACKGROUND

### 1. Technical Field

The present disclosure relates to a signal processing device and a vehicle display apparatus including the same, and more particularly, to a signal processing device capable of performing mixed operation of microservices and a vehicle display apparatus including the same.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device inside a vehicle receives and processes sensor data from various sensor devices inside.

Meanwhile, the types and number of sensors installed in vehicles has increased due to driver assistance systems (ADAS) or autonomous driving, the amount of data to be processed and the number of executed applications are also on the rise.

However, when applications executed in the vehicle are ones that are distributed or installed through different channels or from different sources, interrelated operations between applications or updates of applications can not be performed.

### SUMMARY

It is an objective of the present disclosure to provide a signal processing device capable of performing mixed operation of microservices and a vehicle display apparatus including the same.

It is another objective of the present disclosure to provide a signal processing device capable of partially connecting or partially sharing between heterogeneous applications or heterogeneous microservices and a vehicle display apparatus including the same.

It is another objective of the present disclosure to provide a signal processing device capable of managing related applications or microservices while executing an application and a vehicle display apparatus including the same.

An embodiment of the present disclosure provides a signal processing device and a vehicle display apparatus including the same, the signal processing device including a processor configured to execute a core orchestrator and a vehicle orchestrator, wherein the processor is configured to execute at least one application based on a container runtime, and the vehicle orchestrator is configured to perform monitoring and management of applications, microservices, and device resources based on communication with the core orchestrator.

Meanwhile, the vehicle orchestrator can be configured to select and control a target application or a target microservice.

Meanwhile, the vehicle orchestrator can be configured to perform partial connection or partial sharing between heterogeneous applications or heterogeneous microservices based on communication with the core orchestrator.

Meanwhile, the vehicle orchestrator can be configured to set an update time for an executed application based on communication with the core orchestrator.

Meanwhile, the vehicle orchestrator can be configured to set an update time for an executed application during vehicle driving.

Meanwhile, in response to executing a first application and a second application, the vehicle orchestrator or the core orchestrator can be configured to execute, update, or terminate the second application based on sensor data corresponding to the first application.

Meanwhile, the vehicle orchestrator can be configured to monitor a microservice corresponding to the first application and execute, update, or terminate the second application based on the device resources.

Meanwhile, in response to executing the first and second applications, the vehicle orchestrator can control a microservice of the first application or a microservice of the second application based on the device resources and communication nodes.

Meanwhile, the vehicle orchestrator can be configured to monitor vehicle speed data based on an application related to vehicle speed and, while executing a vehicle light application, terminate the vehicle light application in resposne to the vehicle speed data being equal to or above a predetermined value.

Meanwhile, the vehicle orchestrator can be configured to execute a lane keeping application while executing a driver monitoring application.

Meanwhile, the vehicle orchestrator can be configured to update the lane keeping application, based on the device resources, while executing the driver monitoring application.

Meanwhile, the vehicle orchestrator can be configured to perform gateway management and node management of a worker node and a master node.

Meanwhile, the vehicle orchestrator can be configured to perform safety management and fail safe mode management for vehicle safety.

Meanwhile, the vehicle orchestrator can be configured to perform fail safe mode management including monitoring and management of a first microservice corresponsing to a main microservice, and a second microservice corresponsing to a redundant microservice.

Meanwhile, in the event of a failure in the first microservice, the vehicle orchestrator can be configured to transmit a recovery command to the first microservice and transmit an activation command to the second microservice.

Meanwhile, the first microservice or the second microservice can be a safety monitoring service.

Meanwhile, the vehicle orchestrator can be configured to distribute, execute, or manage a plurality of microservices for a safety monitoring service.

Meanwhile, the vehicle orchestrator can be configured to perform operation transition from the first microservice to the second microservice based on a monitoring score or an analysis score.

Another embodiment of the present disclosure provides a signal processing device and a vehicle display device including the same, the signal processing device including a processor configured to execute a core orchestrator and a vehicle orchestrator, wherein the processor is configured to execute at least one application based on a container runtime, and the vehicle orchestrator is configured to perform partial connection or partial sharing between heterogeneous applications or heterogeneous microservices based on communication with the core orchestrator.

Meanwhile, in response to executing a first application and a second application, the vehicle orchestrator or the core orchestrator can be configured to execute, update, or terminate the second application based on sensor data corresponding to the first application.

### EFFECTS OF THE DISCLOSURE

An embodiment of the present disclosure provides a signal processing device and a vehicle display apparatus including the same, the signal processing device including a processor configured to execute a core orchestrator and a vehicle orchestrator, wherein the processor is configured to execute at least one application based on a container runtime, and the vehicle orchestrator is configured to perform monitoring and management of applications, microservices, and device resources based on communication with the core orchestrator. Accordingly, it is possible to perform mixed operation of microservices.

Meanwhile, the vehicle orchestrator can be configured to select and control a target application or a target microservice. Accordingly, it is possible to perform mixed operation of microservices.

Meanwhile, the vehicle orchestrator can be configured to perform partial connection or partial sharing between heterogeneous applications or heterogeneous microservices based on communication with the core orchestrator. Accordingly, it is possible to partially link or share heterogeneous applications or heterogeneous microservices.

Meanwhile, the vehicle orchestrator can be configured to set an update time for an executed application based on communication with the core orchestrator. Accordingly, it is possible to perform mixed operation of microservices.

Meanwhile, the vehicle orchestrator can be configured to set an update time for an executed application during vehicle driving. Accordingly, it is possible to perform mixed operation of microservices.

Meanwhile, in response to executing a first application and a second application, the vehicle orchestrator or the core orchestrator can be configured to execute, update, or terminate the second application based on sensor data corresponding to the first application. Accordingly, it is possible to manage related applications or microservices while executing an application.

Meanwhile, the vehicle orchestrator can be configured to monitor a microservice corresponding to the first application and execute, update, or terminate the second application based on the device resources. Accordingly, it is possible to manage related applications or microservices while executing an application.

Meanwhile, in response to executing the first and second applications, the vehicle orchestrator can control a microservice of the first application or a microservice of the second application based on the device resources and communication nodes. Accordingly, it is possible to manage related applications or microservices while executing an application.

Meanwhile, the vehicle orchestrator can be configured to monitor vehicle speed data based on an application related to vehicle speed and, while executing a vehicle light application, terminate the vehicle light application in resposne to the vehicle speed data being equal to or above a predetermined value. Accordingly, it is possible to manage related applications or microservices while executing an application.

Meanwhile, the vehicle orchestrator can be configured to execute a lane keeping application while executing a driver monitoring application. Accordingly, it is possible to manage related applications or microservices while executing an application.

Meanwhile, the vehicle orchestrator can be configured to update the lane keeping application, based on the device resources, while executing the driver monitoring application. Accordingly, it is possible to manage related applications or microservices while executing an application.

Meanwhile, the vehicle orchestrator can be configured to perform gateway management and node management of a worker node and a master node. Accordingly, it is possible to perform mixed operation of microservices.

Meanwhile, the vehicle orchestrator can be configured to perform safety management and fail safe mode management for vehicle safety. Accordingly, it is possible to improve the stability of applications or microservices.

Meanwhile, the vehicle orchestrator can be configured to perform fail safe mode management including monitoring and management of a first microservice corresponsing to a main microservice, and a second microservice corresponsing to a redundant microservice. Accordingly, it is possible to improve the stability of applications or microservices.

Meanwhile, in the event of a failure in the first microservice, the vehicle orchestrator can be configured to transmit a recovery command to the first microservice and transmit an activation command to the second microservice. Accordingly, it is possible to improve the stability of applications or microservices.

Meanwhile, the first microservice or the second microservice can be a safety monitoring service. Accordingly, it is possible to perform mixed operation of microservices.

Meanwhile, the vehicle orchestrator can be configured to distribute, execute, or manage a plurality of microservices for a safety monitoring service. Accordingly, it is possible to improve the stability of applications or microservices.

Meanwhile, the vehicle orchestrator can be configured to perform operation transition from the first microservice to the second microservice based on a monitoring score or an analysis score. Accordingly, it is possible to improve the stability of applications or microservices.

Another embodiment of the present disclosure provides a signal processing device and a vehicle display device including the same, the signal processing device including a processor configured to execute a core orchestrator and a vehicle orchestrator, wherein the processor is configured to execute at least one application based on a container runtime, and the vehicle orchestrator is configured to perform partial connection or partial sharing between heterogeneous applications or heterogeneous microservices based on communication with the core orchestrator. Accordingly, it is possible to perform mixed operation of microservices.

Meanwhile, in response to executing a first application and a second application, the vehicle orchestrator or the core orchestrator can be configured to execute, update, or terminate the second application based on sensor data corresponding to the first application. Accordingly, it is possible to manage related applications or microservices while executing an application.

### BRIEF DESCRIPTION OF THE DRAWINGS

FIG. 1 is a diagram illustrating an example of the exterior and interior of a vehicle;
FIG. 2 is a diagram illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an internal block diagram illustrating an example of a vehicle display apparatus of FIG. 3B;
FIGS. 5A to 5D are diagrams illustrating various examples of a vehicle display apparatus;
FIG. 6 is a block diagram illustrating an example of a vehicle display apparatus according to an embodiment of the present disclosure;
FIGS. 7A to 7B are diagrams referenced in the description of a signal processing device related to the present disclosure.
FIGS. 8A to 8E are diagrams illustrating various examples of execution of a microservice according to an embodiment of the present disclosure.
FIG. 9 is an example of an internal block diagram of a signal processing device according to an embodiment of the present disclosure.
FIG. 10 is an example of an internal block diagram of a signal processing device according to another embodiment of the present disclosure.
FIG. 11 is a diagram illustrating a vehicle signal processing system according to an embodiment of the present disclosure.
FIG. 12 is an example of an internal block diagram of the signal processing device of FIG. 11.
FIGS. 13A to 19D are diagrams referenced in the description of FIG. 12.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

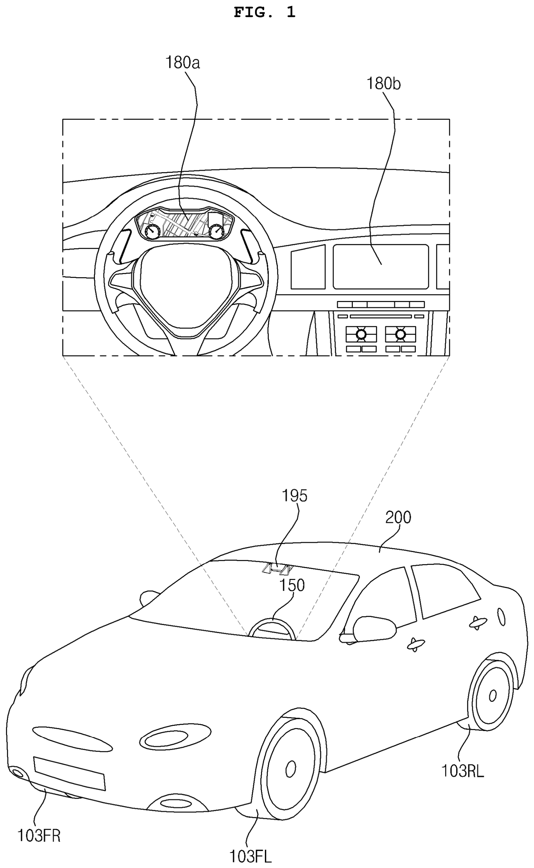

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

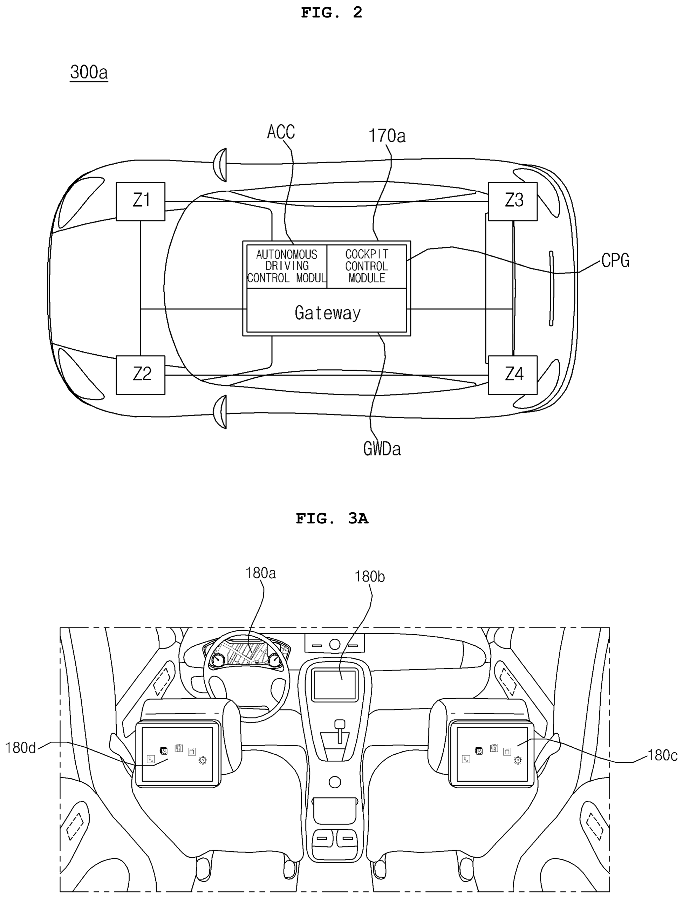

FIG. 2 is a diagram illustrating various architectures of a vehicle communication gateway.

First, FIG. 2 is a diagram illustrating a first architecture of a vehicle communication gateway.

Referring to the drawing, a first architecture 300a can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

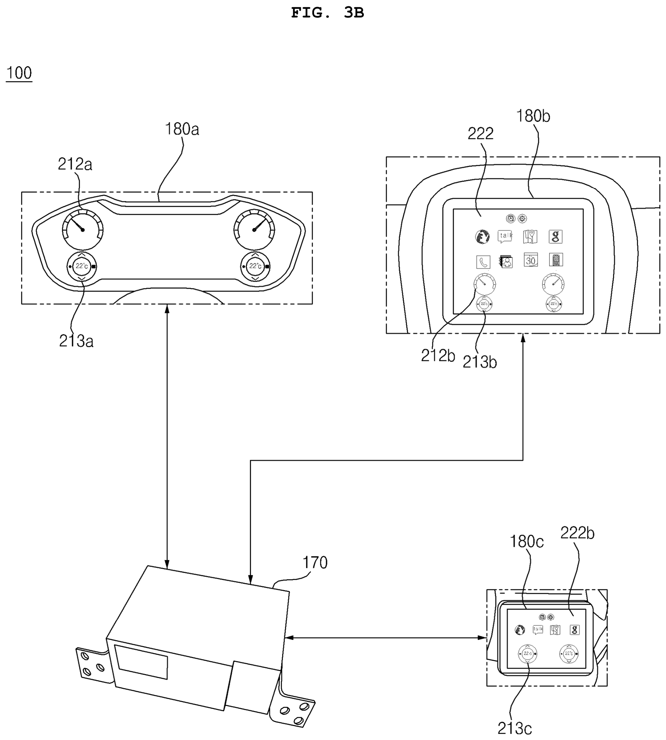

FIG. 3B is a diagram illustrating another example of a vehicle display apparatus in a vehicle.

A vehicle display apparatus 100 according to an embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can be configured to transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to an embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to an embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

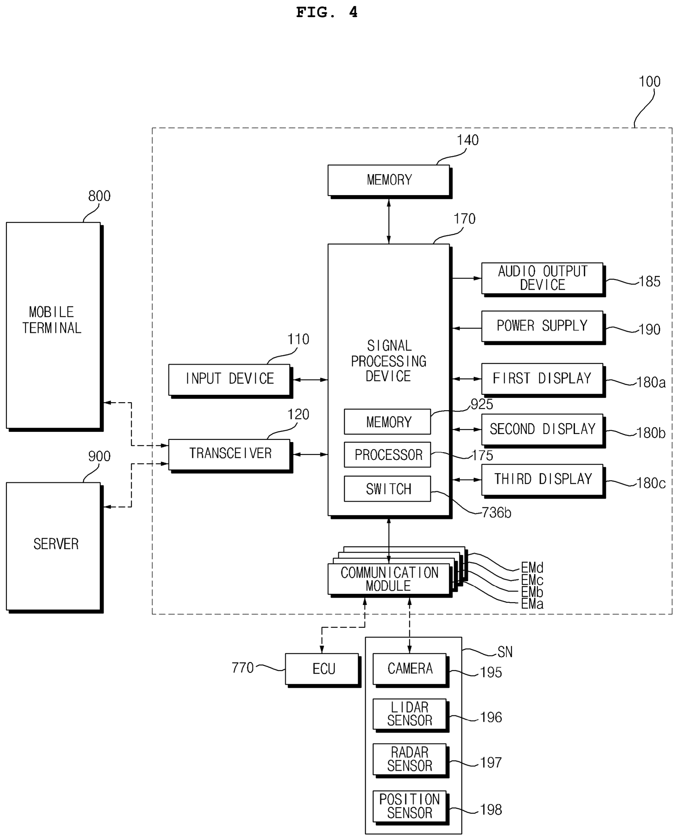

FIG. 4 is an internal block diagram illustrating an example of the vehicle display apparatus of FIG. 3B.

Referring to FIG. 4, a vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can be configured to perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes,, such as Bluetooth, Wi-Fi, WIFI Direct, and APIX, can be used as a wireless data communication scheme.

The transceiver 120 can receive weather information and road traffic state information,, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can be configured to transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can be configured to transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can be configured to transmit the received information to the signal processing device 170.

The memory 140 can store various data necessary for overall operation of the vehicle display apparatus 100,, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100.

For example, the signal processing device 170 can include a processor 175 configured to perform signal processing for the vehicle displays 180a and 180b.

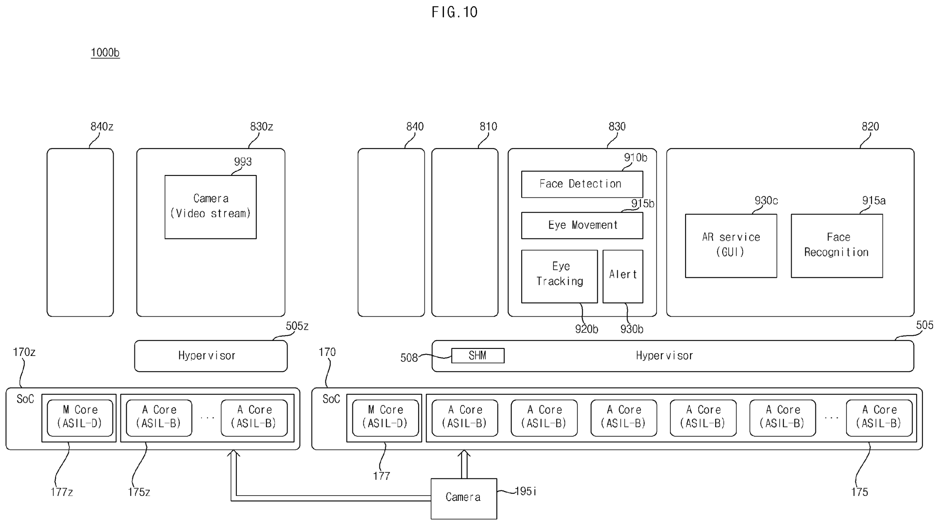

The processor 175 can be configured to execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices,, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process can data, Ethernet data, audio data, radio data, USB data, and wireless communication data for the second and third virtual machines (not shown).

Further, the first virtual machine (not shown) can be configured to transmit the processed data to the second and third virtual machines (not shown).

Accordingly, only the first virtual machine (not shown), among the first to third virtual machines (not shown), can receive sensor data from the plurality of sensor devices, communication data, or external input data, and can be configured to perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals,, such as an audio signal, an image signal, and a data signal. To this end, the signal processing device 170 can be implemented in the form of a system on chip (SOC).

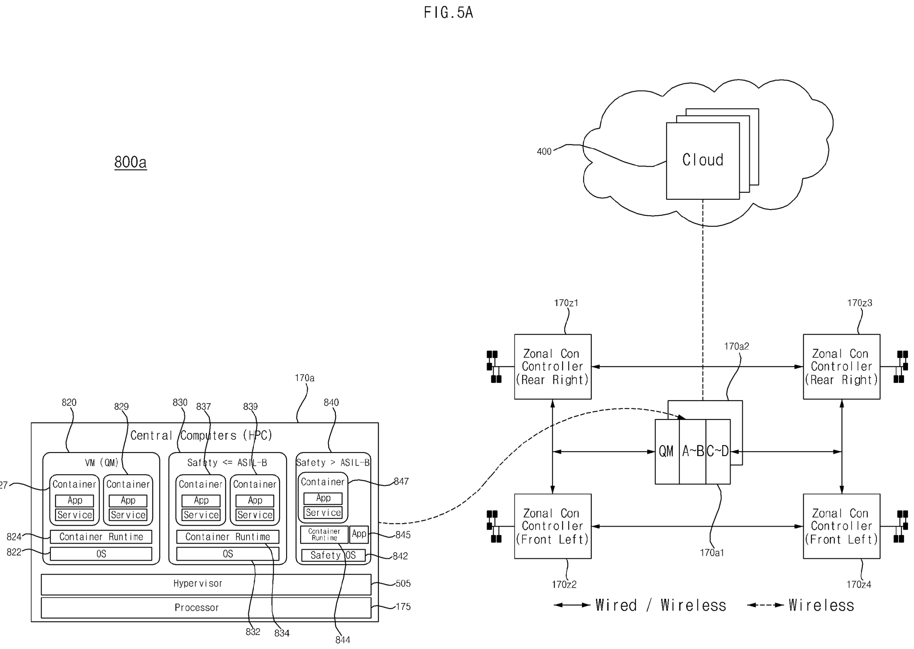

Meanwhile, the signal processing device 170 in the display apparatus 100 of FIG. 4 can be the same as signal processing devices 170, 170a1, and 170a2 of a vehicle display apparatus of FIG. 5A and subsequent figures.

FIGS. 5A to 5D are diagrams illustrating various examples of a vehicle display apparatus.

FIG. 5A is a diagram illustrating an example of a vehicle display apparatus according to an embodiment of the present disclosure.

Referring to FIG. 5A, a vehicle display apparatus 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can be configured to transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

Meanwhile, the camera data can include external vehicle camera data and vehicle internal camera data.

Meanwhile, the signal processing devices 170a1 and 170a2 can be configured to execute a plurality of virtual machines 820, 830, and 840 based on safety levels.

In the drawing, an example is illustrated in which the processor 175 in the signal processing device 170a is configured to execute the hypervisor 505, and is configured to execute first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can be configured to execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can be configured to execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can be configured to execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

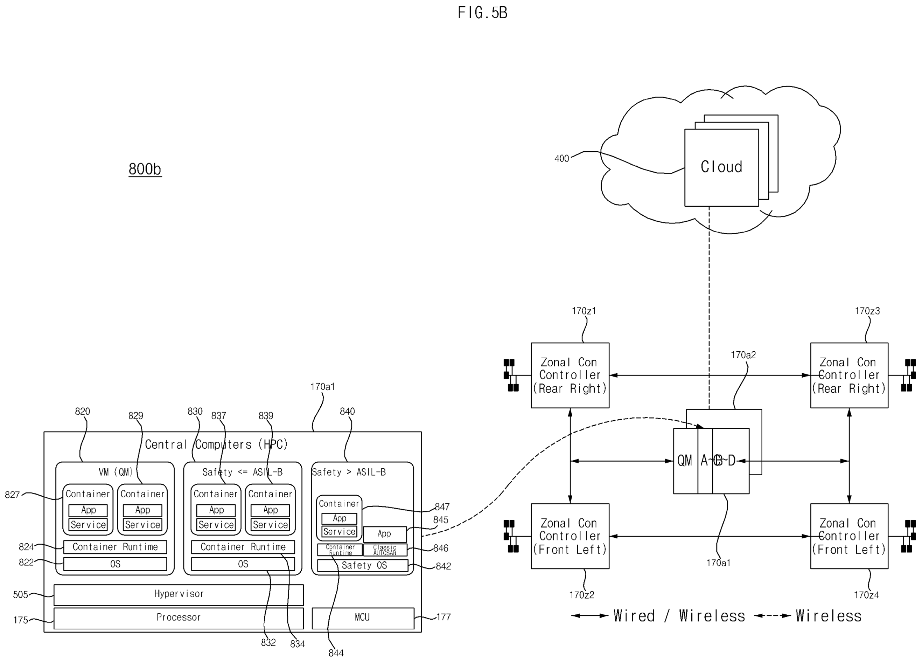

Meanwhile, unlike the drawing, the third virtual machine 840 can also be executed by a separate core, rather than by the processor 175, which will be described below with reference to FIG. 5B.

FIG. 5B is a diagram illustrating another example of a vehicle display apparatus according to an embodiment of the present disclosure.

Referring to FIG. 5B, a vehicle display apparatus 800b according to an embodiment of the present disclosure includes signal processing devices 170a1 and 170a2 and a plurality of zonal signal processing devices 170Z1 to 170Z4.

The vehicle display apparatus 800b of FIG. 5B is similar to the vehicle display apparatus 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 is configured to execute the hypervisor 505, and is configured to execute the first and second virtual machines 820 and 830 on the hypervisor 505 according to the ASIL.

The first virtual machine 820 can be configured to execute the operating system 822, the container runtime 824 on the operating system 822, and the containers 827 and 829 on the container runtime 824.

The second virtual machine 820 can be configured to execute the operating system 832, the container runtime 834 on the operating system 832, and the containers 837 and 839 on the container runtime 834.

Meanwhile, the second processor 177 in the signal processing device 170a1 can be configured to execute the third virtual machine 840.

The third virtual machine 840 can be configured to execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

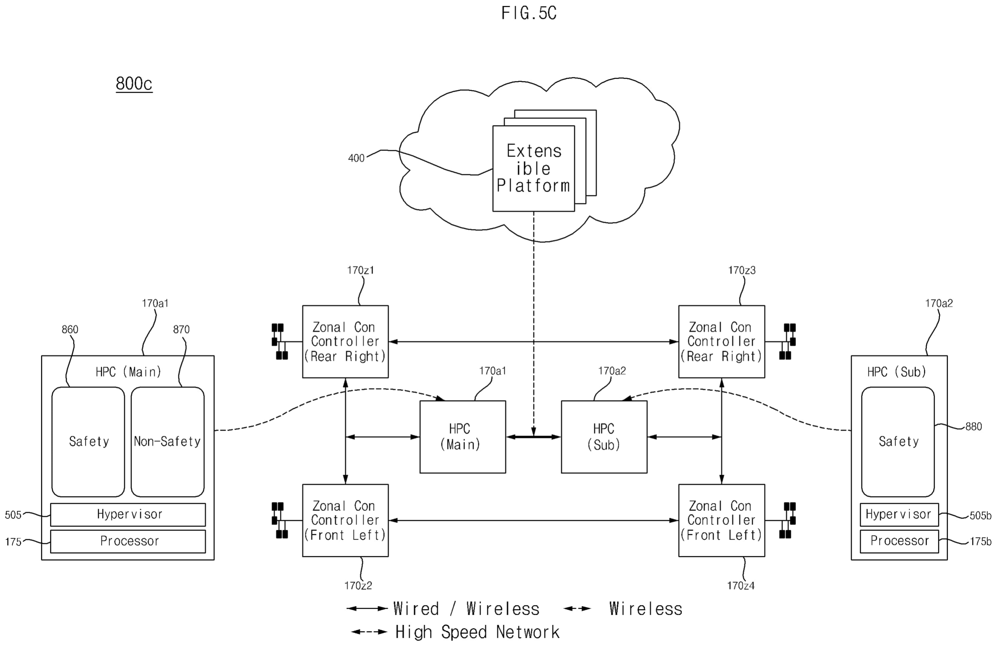

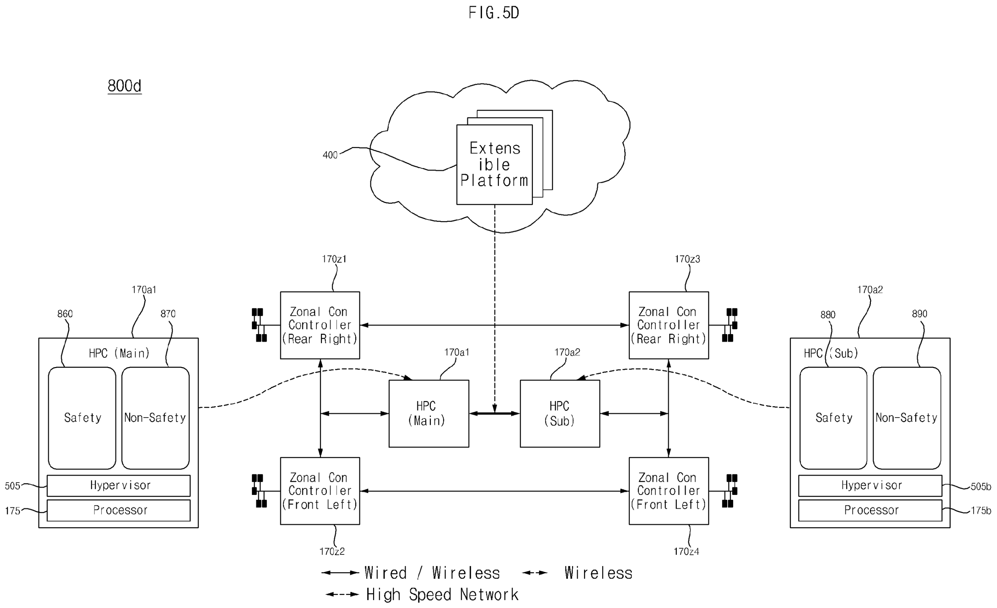

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle display apparatus according to an embodiment of the present disclosure.

Referring to FIG. 5C, a vehicle display apparatus 800c according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can be configured to transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can be configured to execute the hypervisor 505, and can be configured to execute each of a safety virtual machine 860 and a non safety virtual machine 870 on the hypervisor 505.

Meanwhile, the processor 175b in the second signal processing device 170a2 of the signal processing devices 170a1 and 170a2 can be configured to execute the hypervisor 505b, and can be configured to execute only a safety virtual machine 880 on the hypervisor 505.

In the method, safety and non safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle display apparatus according to an embodiment of the present disclosure.

Referring to FIG. 5D, a vehicle display apparatus 800d according to an embodiment of the present disclosure includes signal processing devices 170a1 and 170a2 and a plurality of zonal signal processing devices 170Z1 to 170Z4.

The vehicle display apparatus 800d of FIG. 5D is similar to the vehicle display apparatus 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can be configured to execute the hypervisor 505b, and can be configured to execute each of a safety virtual machine 880 and a non safety virtual machine 890 on the hypervisor 505.

That is, unlike FIG. 5C, there is a difference in that the processor 175b in the second signal processing device 170a2 further is configured to execute the non safety virtual machine 890.

In the method, safety and non safety virtual machines can be processed separately by the first signal processing device 170a1 and the second signal processing device 170a2, thereby improving stability and processing speed.

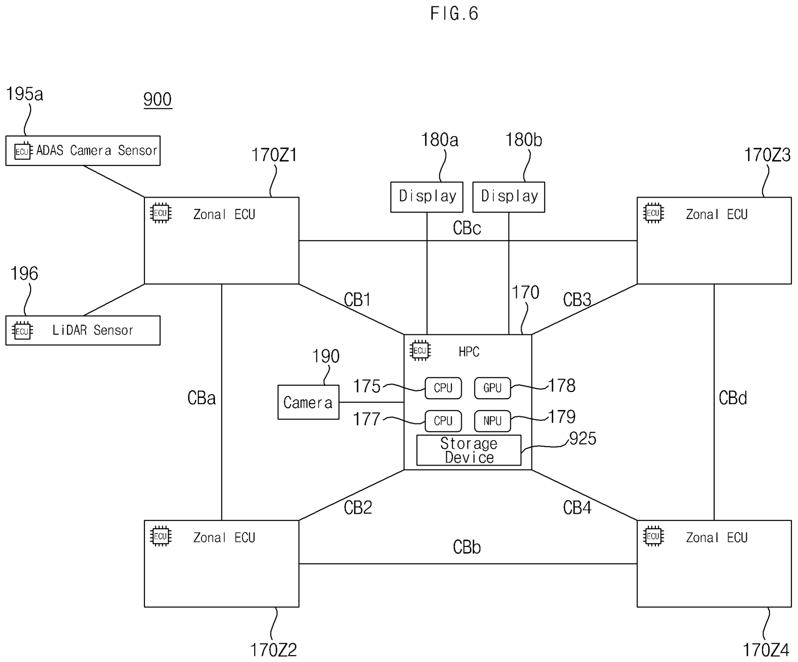

FIG. 6 is an exemplary block diagram of a vehicle display apparatus according to an embodiment of the present disclosure.

Referring to FIG. 6, a vehicle display apparatus 900 according to an embodiment of the present disclosure includes the signal processing device 170 and at least one display.

In the diagram, a cluster display 180a and an audio video navigation (AVN) display 180b are illustrated as the at least one display.

Meanwhile, the vehicle display apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include can communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can be configured to perform multi path routing based on Software Defined Network (SDN). Accordingly, stable network environment for data write and read operations can be ensured. Further, data can be transmitted to the storage device 925 by using a plurality of paths, such that data can be transmitted by dynamically changing a network configuration.

It is desirable that data communication between the plurality of zonal signal processing devices 170Z1 to 170Z4 and the signal processing device 170 in the vehicle display apparatus 900 according to an embodiment of the present disclosure is peripheral component interconnect express communication in order to provide high band and low delay communication.

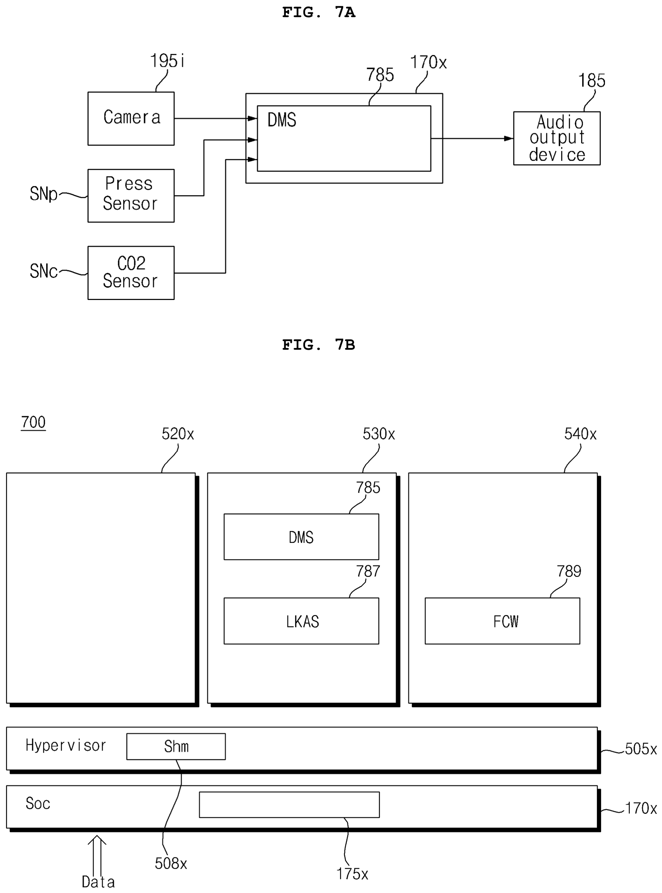

FIGS. 7A and 7B are diagrams referenced in the description of a signal processing device related to the present disclosure.

FIG. 7A illustrates an example in which an application based on camera data, etc. is executed in a signal processing device.

Referring to the drawings, a signal processing device 170x related to the present disclosure is configured to execute a driver monitoring systems (DMS) application 785 based on camera data from an vehicle internal camera 195i, sensor data from a pressure sensor SNp, and sensor data from a gas sensor SNc, and can control a warning sound to be output to an audio output device 185 based on the result data.

FIG. 7B is a diagram referenced in the description of the operation of FIG. 7A.

Referring to the drawings, the signal processing device 170x related to the present disclosure can include a processor 175x, and the processor 175x can be configured to execute a hypervisor 505.

Meanwhile, the processor 175x related to the present disclosure is configured to execute a plurality of virtual machines 520x, 530x, and 540x on the hypervisor 505, and a second virtual machine 530x, among the plurality of virtual machines 520x, 530x, and 540x, can be configured to execute a DMS application 785 based on the camera data from the vehicle internal camera 195i, the sensor data from the pressure sensor SNp, and the sensor data from the gas sensor SNc and execute a lane keep assist system (LKAS) application 787 based on vehicle external camera data.

Meanwhile, a third virtual machine 540x, among the plurality of virtual machines 520x, 530x, and 540x, can be configured to execute a forward collision warning (FCW) application 789 based on the vehicle external camera data.

Meanwhile, as shown in FIGS. 7A and 7B, in response to executing the driver monitoring system (DMS) application 785 and the LKAS application 787 within the second virtual machine 530x, there is a problem that a workload of the second virtual machine 530x is significant.

In particular, for executing the driver monitoring system (DMS) application 785, the camera data from the vehicle internal camera 195i, the sensor data from the pressure sensor SNp, and the sensor data from the gas sensor SNc has to be received and processed, so there is a problem that the workload of the second virtual machine 530x is significant.

Meanwhile, in response to executing the forward collision warning (FCW) application 789, the third virtual machine 540x is executed in a separate virtual machine from the lane keeping assist system 787, which is commonly based on the vehicle external camera data, so there is a problem that the workload is performed inefficiently.

In this disclosure, a method for sharing intermediate result data of an application, etc., in response to executing a similar application is proposed.

To this end, the signal processing device 170 according to an embodiment of the present disclosure divides an application into a plurality of microservices and is configured to execute another microservice based on the results of a microservice, etc., to efficiently distribute the workload.

For example, the signal processing device 170 according to an embodiment of the present disclosure can control a first microservice among the plurality of microservices to be executed in a first virtual machine and a second microservice to be executed in a second virtual machine, and the second microservice to be executed based on result data of the first virtual machine by sharing the result of the first microservice using the shared memory 508, etc. Accordingly, data processing can be performed efficiently.

Meanwhile, the signal processing device 170 according to an embodiment of the present disclosure can be configured to execute a plurality of virtual machines by distinguishing them according to a safety level.

Meanwhile, the signal processing device 170 according to an embodiment of the present disclosure can be configured to execute applications or microservices by dividing them according to the safety level.

Accordingly, in relation to vehicle driver assistance (ADAS) or autonomous driving, data processing can be stably performed according to the automotive safety integrity level (ASIL).

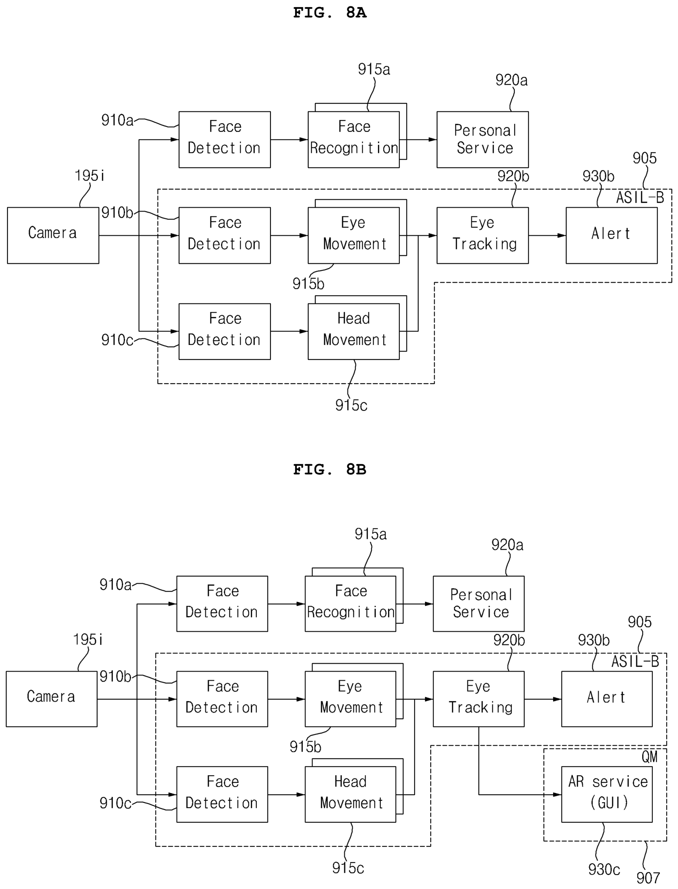

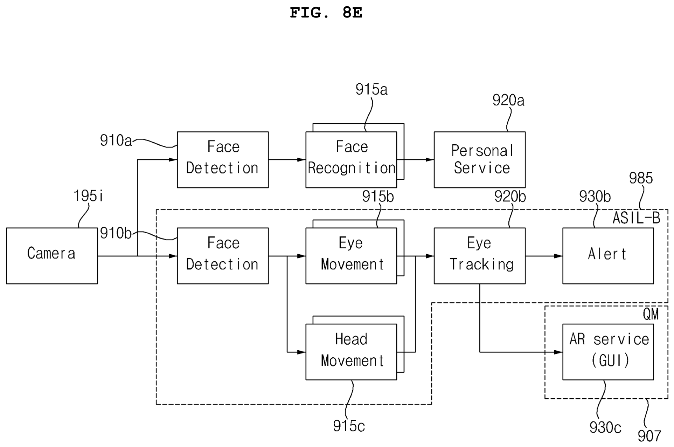

FIGS. 8A and 8E are diagrams illustrating various examples of execution of microservices according to an embodiment of the present disclosure.

FIG. 8A illustrates execution of a plurality of microservices corresponding to ASIL B based on camera data from the internal camera 195i.

Referring to the drawing, the signal processing device 170 according to an embodiment of the present disclosure can be configured to execute the driver monitoring system (DMS) application 905 corresponding to ASIL B.

For example, the signal processing device 170 according to an embodiment of the present disclosure can be configured to execute the driver monitoring system (DMS) application 905 separately for a plurality of microservices.

In the drawing, a plurality of microservices for the driver monitoring system (DMS) application 905 includes, for example, a face detection microservice 910b, an eye movement microservice 915b, an eye tracking microservice 920b, and an alert microservice 930b.

That is, the signal processing device 170 according to an embodiment of the present disclosure can be configured to execute a plurality of microservices, i.e., the face detection microservice 910b, the eye movement microservice 915b, the eye tracking microservice 920b, and the alert microservice 930b, for the driver monitoring system (DMS) application 905 corresponding to ASIL B.

Meanwhile, the face detection microservice 910b is executed based on the camera data from the internal camera 195i, and the result data of the face detection microservice 910b is transmitted to the eye movement microservice 915b.

Meanwhile, the eye movement microservice 915b is executed based on the result data of the face detection microservice 910b, and the result data of the eye movement microservice 915b is transmitted to the eye tracking microservice 920b.

Meanwhile, the eye tracking microservice 920b is executed based on the result data of the eye movement microservice 915b, and the result data of the eye tracking microservice 920b is transmitted to the alert microservice 930b.

Meanwhile, the alert microservice 930b can be executed based on the result data of the eye tracking microservice 920b, and the result data can be input to the audio output device 185, so that a warning sound can be output from the audio output device 185.

Meanwhile, the signal processing device 170 according to an embodiment of the present disclosure can further execute a second face detection microservice 910c and a head movement microservice 915c for the driver monitoring system (DMS) application 905 corresponding to ASIL B.

The second face detection microservice 910c is executed based on the camera data from the internal camera 195i, and the result data of the second face detection microservice 910c is transmitted to the head movement microservice 915c.

Meanwhile, the head movement microservice 915c is executed based on the result data of the second face detection microservice 910c, and the result data of the head movement microservice 915c is transmitted to the eye tracking microservice 920b.

Meanwhile, the eye tracking microservice 920b is executed based on the result data of the head movement microservice 915c and the result data of the eye movement microservice 915b, and the result data of the eye tracking microservice 920b can be transmitted to the alert microservice 930b.

Meanwhile, the signal processing device 170 according to an embodiment of the present disclosure can further execute a plurality of microservices that are not related to ASIL B, for example, corresponding to quality management (QM).

In the drawing, a third face detection microservice 910a, a face recognition microservice 915a, and a personal microservice 920a can be executed as a plurality of microservices that are not related to ASIL B, respectively.

FIG. 8B illustrates an example of executing a plurality of microservices corresponding to ASIL B and a microservice corresponding to QM based on the camera data from the internal camera 195i.

Referring to the drawing, the signal processing device 170 according to an embodiment of the present disclosure can be configured to execute the driver monitoring system (DMS) application 905 corresponding to ASIL B, similarly to FIG. 8A.

For example, the signal processing device 170 according to an embodiment of the present disclosure can be configured to execute each of the face detection microservice 910b, the eye movement microservice 915b, the eye tracking microservice 920b, and the alert microservice 930b as a plurality of microservices for the driver monitoring system (DMS) application 905 corresponding to ASIL B.

Meanwhile, the signal processing device 170 according to an embodiment of the present disclosure can further execute each of the second face detection microservice 910c and the head movement microservice 915c for the driver monitoring system (DMS) application 905 corresponding to ASIL B.

Meanwhile, the signal processing device 170 according to an embodiment of the present disclosure can be configured to execute the third face detection microservice 910a, the face recognition microservice 915a, and the personal microservice 920a as a plurality of microservices, which are not related to ASIL B.

Meanwhile, the signal processing device 170 according to an embodiment of the present disclosure can be configured to execute an augmented reality microservice 930c, which is an example of a graphics provision microservice, as a microservice corresponding to QM.

At this time, the signal processing device 170 according to an embodiment of the present disclosure can be configured to transmit the result data of the eye tracking microservice 920b among the microservices in the application 905 corresponding to ASIL B to the augmented reality microservice 930c corresponding to QM, which has a lower safety level.

Accordingly, the augmented reality microservice 930c corresponding to QM can be executed based on the result data of the eye tracking microservice 920b, and the result data of the augmented reality microservice 930c can be transmitted to the display 180 and displayed.

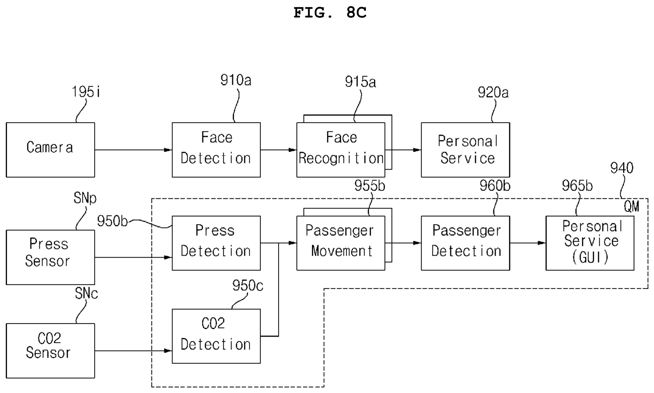

FIG. 8C illustrates execution of a plurality of microservices corresponding to QM.

Referring to the drawing, the signal processing device 170 according to an embodiment of the present disclosure can be configured to execute a passenger monitoring application 940 corresponding to QM.

For example, the signal processing device 170 according to an embodiment of the present disclosure can be configured to execute the passenger monitoring application 940 separately for a plurality of microservices.

In the drawing, as the plurality of microservices for the passenger monitoring application 940, a press detection microservice 950b, a passenger movement microservice 955b, a passenger detection microservice 960b, and a graphics provision microservice 965b.

That is, the signal processing device 170 according to an embodiment of the present disclosure can be configured to execute, as a plurality of microservices, the press detection microservice 950b, the passenger movement microservice 955b, the passenger detection microservice 960b, and the graphics provision microservice 965b, for the passenger monitoring application 940 corresponding to QM.

Meanwhile, the press detection microservice 950b is executed based on the sensor data from the pressure sensor SNp, and the result data of the press detection microservice 950b is transmitted to the passenger movement microservice 955b.

Meanwhile, the passenger movement microservice 955b is executed based on the result data of the press detection microservice 950b, and the result data of the passenger movement microservice 955b is transmitted to the passenger detection microservice 960b.

Meanwhile, the passenger detection microservice 960b is executed based on the result data of the passenger movement microservice 955b, and the result data of the passenger detection microservice 960b is transmitted to the graphics provision microservice 965b.

Meanwhile, the graphics provision microservice 965b is executed based on the result data of the passenger detection microservice 960b, and the result data of the graphics provision microservice 965b can be transmitted to the display 180 and displayed.

Meanwhile, the signal processing device 170 according to an embodiment of the present disclosure can further execute the gas detection (CO₂ detection) microservice 950c for the passenger monitoring application 940 corresponding to QM.

The gas detection (CO₂ detection) microservice 950c is executed based on the sensor data from the gas sensor SNc, and the result data of the gas detection (CO₂ detection) microservice 950c is transmitted to the passenger movement microservice 955b.

Meanwhile, the passenger movement microservice 955b is executed based on the result data of the gas detection (CO₂ detection) microservice 950c, and the result data of the passenger movement microservice 955b is transmitted to the passenger detection microservice 960b.

Meanwhile, the signal processing device 170 according to an embodiment of the present disclosure can further execute a plurality of microservices unrelated to the passenger monitoring application 940.

In the drawing, the signal processing device 170 is illustrated as executing the face detection microservice 910a, the face recognition microservice 915a, and the personal microservice 920a based on the camera data from the vehicle internal camera 195i, as a plurality of microservices unrelated to the passenger monitoring application 940.

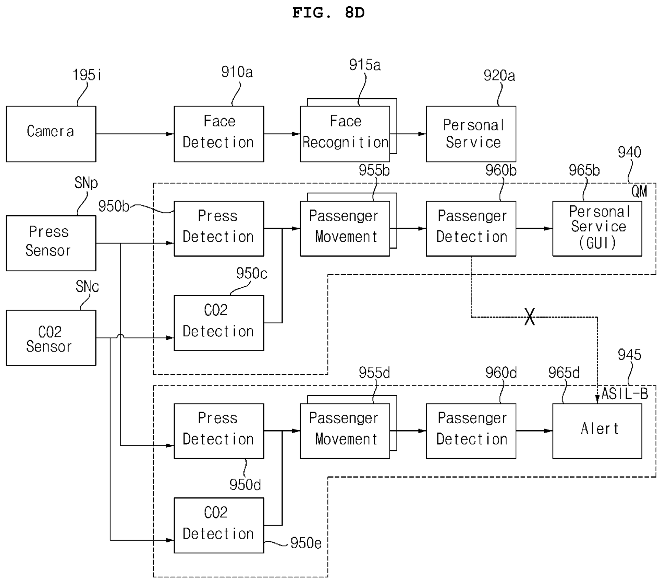

FIG. 8D illustrates execution of a plurality of microservices corresponding to ASIL B and a microservice corresponding to QM.

Referring to the drawing, the signal processing device 170 according to an embodiment of the present disclosure can be configured to execute a passenger monitoring application 940 corresponding to QM, similarly to FIG. 8C.

For example, the signal processing device 170 according to an embodiment of the present disclosure can be configured to execute, as a plurality of microservices, the press detection microservice 950b, the passenger movement microservice 955b, the passenger detection microservice 960b, and the graphics provision microservice 965b, for the passenger monitoring application 940 corresponding to QM.

Meanwhile, the signal processing device 170 according to an embodiment of the present disclosure can further execute the gas detection (CO₂ detection) microservice 950c for the passenger monitoring application 940 corresponding to QM.

Meanwhile, the signal processing device 170 according to an embodiment of the present disclosure can be configured to execute, as a plurality of microservices, the face detection microservice 910a, the face recognition microservice 915a, and the personal microservice 920a unrelated to the passenger monitoring application 940.

Meanwhile, the signal processing device 170 according to an embodiment of the present disclosure can further execute a passenger monitoring application 945 corresponding to ASIL B.

In the drawing, a plurality of microservices for the passenger monitoring application 945 corresponding to ASIL B are illustrated as including a press detection microservice 950d, a passenger movement microservice 955d, a passenger detection microservice 960d, and an alert microservice 965d.

Meanwhile, the press detection microservice 950d is executed based on the sensor data from the pressure sensor SNp, and the result data of the press detection microservice 950d is transmitted to the passenger movement microservice 955d.

Meanwhile, the passenger movement microservice 955d is executed based on the result data of the press detection microservice 950d, and the result data of the passenger movement microservice 955d is transmitted to the passenger detection microservice 960d.

Meanwhile, the passenger detection microservice 960d is executed based on the result data of the passenger movement microservice 955d, and the result data of the passenger detection microservice 960d is transmitted to the alert microservice 965d.

Meanwhile, the alert microservice 965d is executed based on the result data of the passenger detection microservice 960d, and the result data of the alert microservice 965d can be transmitted to the audio output device 185 and output.

Meanwhile, the signal processing device 170 according to an embodiment of the present disclosure can further execute a gas detection (CO₂ detection) microservice 950e for the passenger monitoring application 945 corresponding to ASIL B.

Meanwhile, the gas detection (CO₂ detection) microservice 950e is executed based on the sensor data from the gas sensor SNc, and the result data of the gas detection (CO₂ detection) microservice 950e can be transmitted to the passenger movement microservice 955d.

Meanwhile, the signal processing device 170 according to an embodiment of the present disclosure can be configured to not transmit the result data of the passenger detection microservice 960b among the microservices in the passenger monitoring application 940 corresponding to QM to the alert microservice 965d in the passenger monitoring application 945 corresponding to ASIL B.

That is, since the safety level of the passenger detection microservice 960b in the passenger monitoring application 940 corresponding to QM is lower than the safety level of the alert microservice 965d in the passenger monitoring application 945 corresponding to ASIL B, the signal processing device 170 according to an embodiment of the present disclosure cannot transmit the result data of the passenger detection microservice 960b to the alert microservice 965d in the passenger monitoring application 945 corresponding to ASIL B. Accordingly, each safety level can be maintained.

FIG. 8E illustrates another example of execution of a plurality of microservices corresponding to ASIL B and a microservice corresponding to QM based on camera data from the internal camera 195i.

Referring to the drawing, the signal processing device 170 according to an embodiment of the present disclosure can be configured to execute a driver monitoring system (DMS) application 985 corresponding to ASIL B, similarly to FIG. 8B.

The driver monitoring system (DMS) application 985 is similar to the driver monitoring system (DMS) application 905 of FIG. 8B but has a difference in that the second face detection microservice 910c is not performed.

For example, the signal processing device 170 according to an embodiment of the present disclosure can be configured to execute, as a plurality of microservices, the face detection microservice 910b, the eye movement microservice 915b, the head movement microservice 915c, the eye tracking microservice 920b, and the alert microservice 930b, for the driver monitoring system (DMS) application 985 corresponding to ASIL B.

Meanwhile, the head movement microservice 915c is executed based on the result data of the face detection microservice 910b, and the result data of the head movement microservice 915c is transmitted to the eye tracking microservice 920b.

Meanwhile, the signal processing device 170 according to an embodiment of the present disclosure can be configured to execute the third face detection microservice 910a, the face recognition microservice 915a, and the personal microservice 920a as a plurality of microservices that are not related to ASIL B.

Meanwhile, the signal processing device 170 according to an embodiment of the present disclosure can be configured to execute an augmented reality microservice 930c as a microservice corresponding to QM.

At this time, the signal processing device 170 according to an embodiment of the present disclosure can be configured to transmit the result data of the eye tracking microservice 920b among the microservices in the application 985 corresponding to ASIL B to the augmented reality microservice 930c corresponding to QM, which has a lower safety level.

Accordingly, the augmented reality microservice 930c corresponding to QM is executed based on the result data of the eye tracking microservice 920b, and the result data of the augmented reality microservice 930c can be transmitted to the display 180 and displayed.

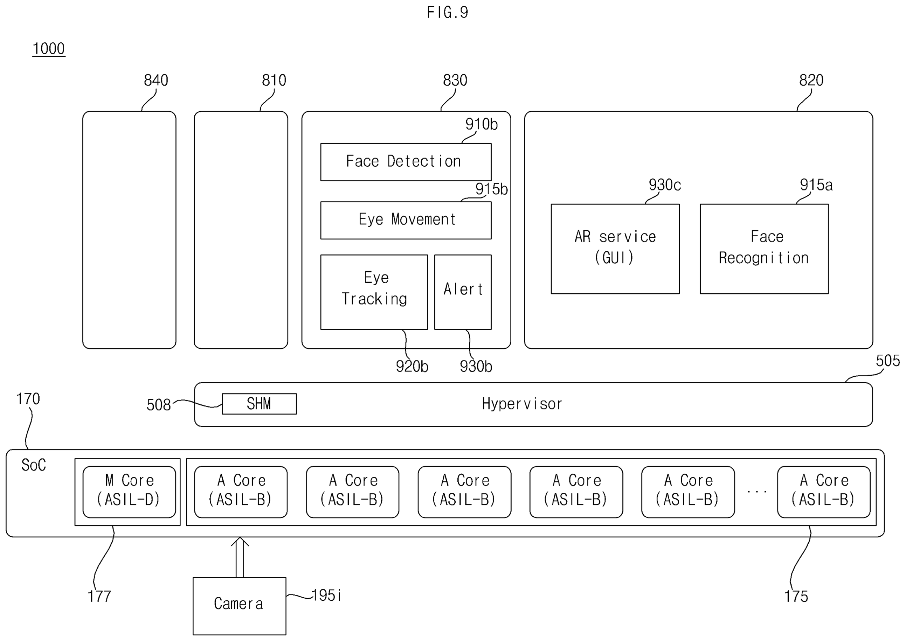

FIG. 9 is an example of an internal block diagram of the signal processing device according to an embodiment of the present disclosure.

Referring to the drawing, the signal processing device 170 in a system 1000 according to an embodiment of the present disclosure has a processor 175 that is configured to execute the hypervisor 505.

Meanwhile, the processor 175 can correspond to the central processor (CPU) of FIG. 6.

Meanwhile, the processor 175 can have a plurality of processor cores.

In the drawing, the plurality of processor cores are illustrated as operating based on the safety level of ASIL B, but various modifications can be made.

For example, some of the plurality of processor cores can operate based on the safety level of ASIL B, and others can operate based on the safety level of QM.

Meanwhile, the signal processing device 170 according to an embodiment of the present disclosure can further include a second processor 177 including an M core or a micom unit (MCU) for executing applications of the highest safety level, ASIL D.

Meanwhile, the processor 175 is configured to execute a plurality of virtual machines 810 to 830 on the hypervisor 505.

Meanwhile, among the plurality of virtual machines 810 to 830, the first virtual machine 830 is configured to execute a plurality of microservices 910b, 915b, 920b, and 930b corresponding to a first safety level, such as ASIL B.

Meanwhile, among the plurality of virtual machines 810 to 830, the first virtual machine 830 transmits the result data of the first microservice 920b among the plurality of microservices to the second virtual machine 820 among the plurality of virtual machines 810 to 830 corresponding to a second safety level lower than the first safety level or to a virtual machine within the second signal processing device 170Z. Accordingly, it is possible to perform mixed operation of microservices. Furthermore, it is possible to perform data processing efficiently using microservices.

Meanwhile, the first virtual machine 830 can be configured to execute a plurality of microservices separately for executing a first application corresponding to the first safety level.

That is, among the plurality of virtual machines 810 to 830, the first virtual machine 830 can separately execute the face detection microservice 910b, the eye movement microservice 915b, the eye tracking microservice 920b, and the alert microservice 930b as a plurality of microservices for the driver monitoring system (DMS) application 905 corresponding to the first safety level, such as ASIL B.

Meanwhile, the second virtual machine 820 can be configured to execute a second application corresponding to the second safety level, and the second application can be executed based on the result data of the first microservice 920b.

For example, among the plurality of virtual machines 810 to 830, the second virtual machine 820 can be configured to execute the augmented reality microservice 930c as a microservice corresponding to the second safety level, QM, as shown in FIG. 8B.

Meanwhile, among the plurality of virtual machines 810 to 830, the second virtual machine 820 can be configured to execute the face recognition microservice 915a as a microservice corresponding to the second safety level, QM, as shown in FIG. 8B.

Meanwhile, among the plurality of virtual machines 810 to 830, the second virtual machine 820 can be configured to execute the augmented reality microservice 930c as a microservice corresponding to QM.

Meanwhile, the first virtual machine 830 can be configured to transmit the result data of the eye tracking microservice 920b among the microservices in the application 905 corresponding to ASIL B to the augmented reality microservice 930c corresponding to QM, which has a lower safety level.

That is, the first virtual machine 830 can be configured to transmit the result data of the eye tracking microservice 920b among the microservices in the application 905 corresponding to ASIL B to the augmented reality microservice 930c in the second virtual machine 820 with a lower safety level, as shown in FIG. 8B.

Specifically, the first virtual machine 830 can be configured to execute each of the face detection microservice 910b, the eye movement microservice 915b, the eye tracking microservice 920b, and the alert microservice 930b based on the received camera data and transmit the result data of the eye tracking microservice 920b to the second virtual machine 820 corresponding to the second safety level.

Meanwhile, the second virtual machine 820 can be configured to execute the augmented reality microservice 930c based on the result data of the eye tracking microservice 920b and control the display 180 to display the result data of the augmented reality microservice 930c as shown in FIG. 8B.

In this manner, the eye tracking microservice 920b does not need to be separately executed within the second virtual machine 820, and therefore it is possible to perform mixed operation of microservices.

Meanwhile, the first virtual machine 830 can be configured to transmit the result data of the first microservice 920b to at least one virtual machine corresponding to the second safety level, which is lower than the first safety level, using the shared memory 508.

Meanwhile, the first virtual machine 830 can be configured to transmit the result data of the first microservice 920b to the second virtual machine 820 corresponding to the second safety level lower than the first safety level by using the shared memory 508.

Meanwhile, the first virtual machine 830 can be configured to transmit the result data of the eye tracking microservice 920b to the augmented reality microservice 930c within the second virtual machine 820 by using the shared memory within the hypervisor 505.

In this manner, when the shared memory 508 is used when transmitting the result data, 1:n result data can be transmitted.

Meanwhile, the second virtual machine 820 can be configured to not transmit the result data of the microservice being executed or the result data of the application to the first virtual machine 830.

That is, the second virtual machine 820 can be configured to not transmit data to the first virtual machine 830 with a higher safety level.

For example, the result data of the face recognition microservice 915a in the second virtual machine 820 can not be transmitted to the first virtual machine 830. Accordingly, the safety level of each virtual machine can be maintained.

Meanwhile, the first virtual machine 830 among the plurality of virtual machines 810 to 830 can be configured to not transmit the result data of the first microservice 920b among the plurality of microservices to the virtual machine with a third safety level higher than the first safety level.

For example, if the third virtual machine 810 among the plurality of virtual machines 810 to 830 has the third safety level higher than the first safety level as ASIL D, the first virtual machine 830 can be configured to not transmit the result data of the first microservice 920b among the plurality of microservices to the third virtual machine 810 of the third safety level higher than the first safety level or the fourth virtual machine 840. Accordingly, the safety level of each virtual machine can be maintained.

Meanwhile, some cores of the processor 175 can be configured to execute the first virtual machine 830, and other cores of the processor 175 can be configured to execute the second virtual machine 820.

In the drawing, it is illustrated that some cores of the processor 175 execute the first virtual machine 830 corresponding to the first safety level, ASIL B, and other cores of the processor 175 execute the second virtual machine 820 corresponding to the second safety level, QM. Accordingly, it is possible to perform mixed operation of microservices.

Meanwhile, the second processor 177 can be configured to execute an application or virtual machine of the highest safety level, ASIL D.

Meanwhile, the safety level of the application or virtual machine executed on the second processor 177 can be higher than the first safety level. Accordingly, it is possible to perform mixed operation of microservices.

Meanwhile, the second virtual machine 820 can be configured to execute the face recognition microservice 915a based on the received camera data and execute an additional microservice, the personal microservice 920a, based on the result data of the face recognition microservice, as shown in FIG. 8D.

Meanwhile, the second virtual machine 820 can be configured to execute each of the press detection microservice 950b, the passenger movement microservice 955b, the passenger detection microservice 960b, and the graphics provision microservice 965b for the passenger monitoring application 940 corresponding to QM based on the received sensor data or camera data and can be configured to not transmit the service result data of the passenger detection microservice 960b to the first virtual machine 830 , as shown in FIG. 8D.

Meanwhile, if the service result data of the passenger detection microservice 960b is not received from the second virtual machine 820, the first virtual machine 830 can be configured to execute each of the press detection microservice 950d, the passenger movement microservice 955d, the passenger detection microservice 960d, and the alert microservice 965d for the passenger monitoring application 945 corresponding to ASIL B, based on the received sensor data or camera data, as shown in FIG. 8D. Accordingly, it is possible to perform mixed operation of microservices.

Meanwhile, the first virtual machine 830 in the signal processing device 170 according to another embodiment of the present disclosure is configured to execute the first application and transmit the result data or intermediate result data of the first application to the second virtual machine 820 or to a virtual machine in the second signal processing device 170Z corresponding to the second safety level. Accordingly, it is possible to perform mixed operation of microservices. In addition, data processing can be performed efficiently using microservices.

Meanwhile, the first virtual machine 830 can be configured to execute the first application including a plurality of microservices and transmit result data of at least some of the plurality of microservices to the second virtual machine 820 or the second signal processing device 170Z.

FIG. 10 is an example of an internal block diagram of a signal processing device according to another embodiment of the present disclosure.

Referring to the drawing, the signal processing device 170 in a system 1000b according to another embodiment of the present disclosure can be configured to transmit data to the second signal processing device 170 or receive data from the second signal processing device 170.

Referring to a difference from FIG. 9, the second signal processing device 170z can be a zonal signal processing device.

The second signal processing device 170z includes a processor 175z that is configured to execute a hypervisor 505z.

Meanwhile, the processor 175z in the second signal processing device 170z can have a plurality of processor cores.

Meanwhile, the second signal processing device 170z can further include a separate processor 177z including an M core or an MCU (micom unit) for executing applications of the highest safety level, ASIL D.

Meanwhile, the processor 175z can be configured to execute at least one virtual machine 830z on the hypervisor 505.

Meanwhile, the separate processor 177z can be configured to execute a virtual machine 840z corresponding to the highest safety level, ASIL D, on the M core.

Meanwhile, the camera data from the internal camera 195i can be transmitted to the signal processing device 170 or the second signal processing device 170z.

In the drawing, it is illustrated that the virtual machine 830z in the processor 175z is configured to execute a video stream application 993 based on the camera data.

Meanwhile, the processor 175 in the signal processing device 170 can receive sensor data or camera data from the second signal processing device 170Z.

Meanwhile, the first virtual machine 830 in the signal processing device 170 can be configured to execute a plurality of microservices corresponding to the first safety level based on the sensor data or camera data, and, as shown in FIG. 8B, can be configured to transmit result data of a first microservice 920b among the plurality of microservices to the second virtual machine 820 corresponding to the second safety level lower than the first safety level.

Meanwhile, the first virtual machine 830 in the signal processing device 170 can be configured to execute a plurality of microservices corresponding to the first safety level based on the sensor data or camera data and transmit the result data of the first microservice 920b among the plurality of microservices to a virtual machine in the second signal processing device 170z corresponding to the second safety level lower than the first safety level.

For example, the first virtual machine 830 in the signal processing device 170 can be configured to transmit the result data of the eye tracking microservice 920b to the virtual machine 830z in the second signal processing device 170z corresponding to the same safety level, ASIL B.

Accordingly, the virtual machine 830z in the second signal processing device 170Z does not need to separately execute the eye tracking microservice 920b, and thus can be configured to perform mixed operation of microservices.

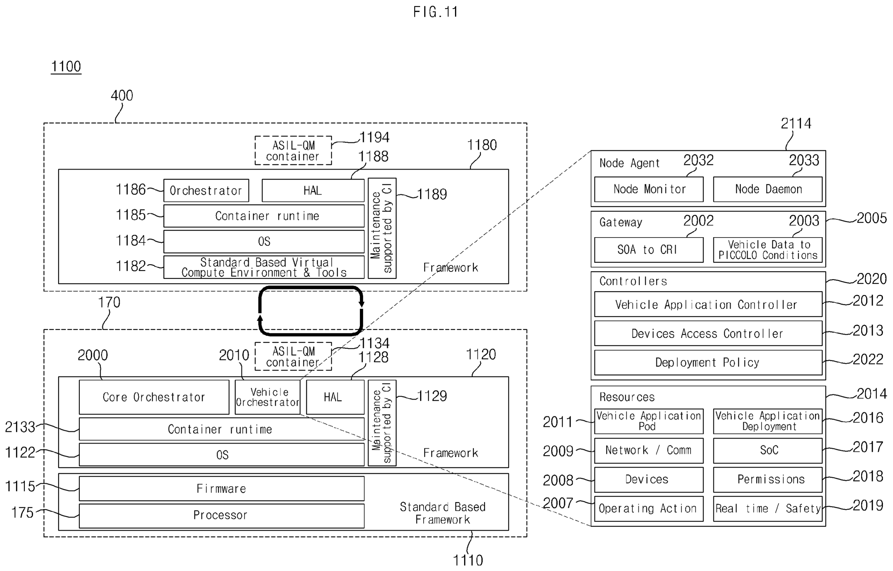

FIG. 11 is a diagram illustrating a vehicle signal processing system according to an embodiment of the present disclosure.

Referring to the drawing, the signal processing device 170 according to an embodiment of the present disclosure includes a server 400 and a signal processing device 170 in the vehicle 200.

The signal processing device 170 according to an embodiment of the present disclosure includes a processor 175 that executes a core orchestrator 2000 and a vehicle orchestrator 2010.

For example, the processor 175 according to an embodiment of the present disclosure can be configured to execute firmware 1115 based on standard-based firmware 1110.

Meanwhile, the processor 175 according to an embodiment of the present disclosure can be configured to execute a framework 1120 on the firmware 1115.

Meanwhile, the framework 1120 can include an operating system 1122, a container runtime 2133, a core orchestrator 2000, a vehicle orchestrator 2010, a hardware abstraction layer (HAL) 1128, and an application 1134.

For example, the processor 175 can be configured to execute the operating system 1122 on the firmware 1115, execute the container runtime 2133 on the operating system 1122, execute the core orchestrator 2000 and the vehicle orchestrator 2010 on the container runtime 2133, and execute the application 1134 on either the core orchestrator 2000 or the vehicle orchestrator 2010.

Meanwhile, the server 400 can be configured to execute the framework 1180.

Meanwhile, the framework 1180 can include a standard-based virtual computer environment 1182, an operating system 1184, a container runtime 1185, an orchestrator 1186, a hardware abstraction layer (HAL) 1188, and an application 1194.

For example, the server 400 can be configured to execute the container runtime 1185 on the operating system 1184, execute the orchestrator 1186 and the hardware abstraction layer (HAL) 1188 on the container runtime 1185, and execute the application 1194 on either the orchestrator 1186 or the hardware abstraction layer (HAL) 1188.

Meanwhile, the signal processing device 170 in the vehicle can download and install, or update, applications received from external sources via the server 400 or the like, in addition to pre-installed applications.

In the present disclosure, the vehicle orchestrator 2010 is executed separately from the core orchestrator 2000, so as to enable mixed operation of heterogeneous applications or heterogeneous microservices corresponding to heterogeneous applications.

To this end, the vehicle orchestrator 2010 can be configured to execute a resource monitor 2014, a controller 2020, a gateway 2005, and a node agent 2114.

For example, the resource monitor 2014 within the vehicle orchestrator 2010 can be configured to monitor or manage resources or the like of an operating action 2007, devices 2008, a network or communication 2009, a vehicle application pod 2011, a vehicle application deployment 2016, a signal processing device (SoC) 2017, permissions 2018, and real-time or safety 2019.

Meanwhile, the controller 2020 within the vehicle orchestrator 2010 can be configured to execute a vehicle application controller 2012, a devices access controller 2013, a deployment policy 2022, etc.

Meanwhile, the gateway 2005 within the vehicle orchestrator 2010 can be configured to perform reception 2002 of service oriented architecture (SOA) data and transformation 2003 of vehicle data.

Meanwhile, a node agent 2114 within the vehicle orchestrator 2010 can be configured to execute a node monitor 2032, a node daemon 2033, etc.

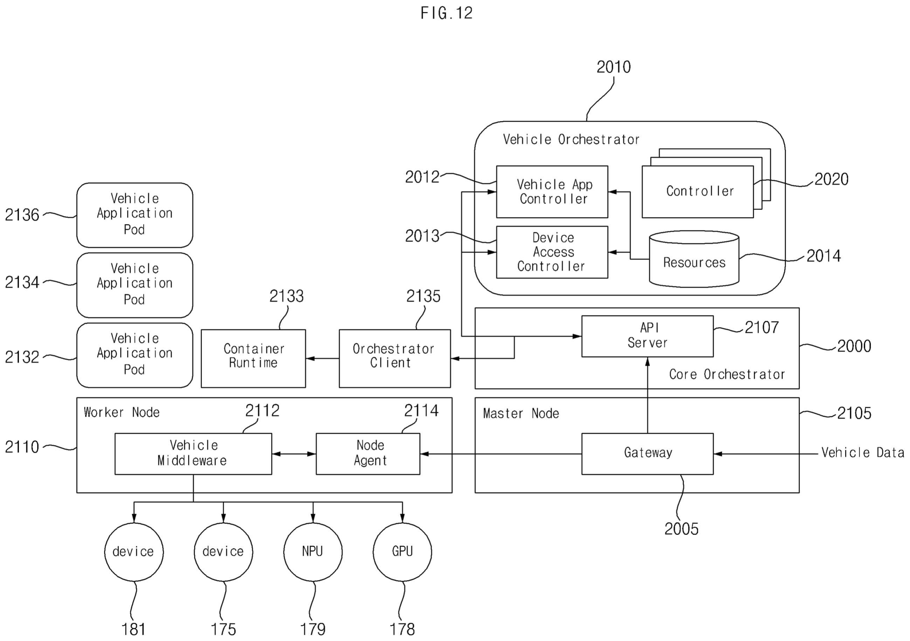

FIG. 12 is an example of an internal block diagram of the signal processing device shown in FIG. 11.

Referring to the drawing, the signal processing device 170 according to an embodiment of the present disclosure includes a processor (CPU) 175 that executes the core orchestrator 2000 and the vehicle orchestrator 2010.

Meanwhile, the processor 175 according to an embodiment of the present disclosure can be configured to execute at least one application based on a container runtime 2133, and the vehicle orchestrator 2010 can be configured to perform monitoring and management of applications, microservices, and device resources based on communication with the core orchestrator 2000. Accordingly, it is possible to perform mixed operation of microservices.

Meanwhile, the signal processing device 170 according to an embodiment of the present disclosure can further include a GPU 178, an NPU 179, etc.

Meanwhile, the signal processing device 170 can be configured to execute a worker node 2110 including middleware 2112 and a node agent 2114, through the processor 175 or the like, and can be configured to execute applications 2132, 2134, and 2136, the container runtime 2133, and an orchestrator client 2135 on the worker node 2110.

Meanwhile, the signal processing device 170 can be configured to execute a master node 2105 including a gateway 2005, through the processor 175 or the like, and can be configured to execute the core orchestrator 2000 including an application programming interface (API) server 2107, on the master node 2105.

Meanwhile, the processor 175 according to an embodiment of the present disclosure executes the vehicle orchestrator 2010 separately from the core orchestrator 2000.

Meanwhile, the vehicle orchestrator 2010 according to an embodiment of the present disclosure can be configured to execute a resource monitor 2014 for resource monitoring, a vehicle application controller 2012 for controlling vehicle applications or microservices, a devices access controller 2013 for device access control, a controller 2020, etc.

Meanwhile, the gateway 2005 within the master node 2105 and the node agent 2114 within the worker node 2110 can operate based on the operation or control of the vehicle orchestrator 2010.

For example, the gateway 2005 receives vehicle data including sensor data, etc. and transmits the vehicle data, etc. to the API server 2107 within the core orchestrator 2000.

Meanwhile, the vehicle orchestrator 2010 can receive vehicle data, etc. from the core orchestrator 2000, and can control at least some of executed applications based on the device resources, etc.

For example, the vehicle orchestrator 2010 can be configured to select and control a target application or a target microservice. Accordingly, it is possible to perform mixed operation of microservices.

Specifically, the vehicle orchestrator 2010 can be configured to select and control a target application or a target microservice based on vehicle data received from the core orchestrator 2000, the device resources, etc.

Meanwhile, the processor 175 according to another embodiment of the present disclosure can be configured to execute at least one application based on the container runtime 2133, and the vehicle orchestrator 2010 can be configured to perform partial connection or partial sharing between heterogeneous applications or heterogeneous microservices based on communication with the core orchestrator 2000. Accordingly, it is possible to perform mixed operation of microservices.

For example, the vehicle orchestrator 2010 can output control signals for partial connection or partial sharing to the orchestrator client 2135, based on communication with the core orchestrator 2000, and the orchestrator client 2135 can be configured to transmit the control signals to the container runtime 2133.

Meanwhile, the container runtime 2133 can control at least one of a plurality of executed applications 2132, 2134, and 2136.

For example, the container runtime 2133 can perform partial connection or partial sharing between heterogeneous applications or heterogeneous microservices based on control signals received from the orchestrator client 2135. Accordingly, it is possible to partially link or partially share heterogeneous applications or heterogeneous microservices.

The vehicle orchestrator 2010 can be configured to set an update time for an executed application. Accordingly, it is possible to perform mixed operation of microservices.

For example, the vehicle orchestrator 2010 can be configured to set an update time for an executed application during vehicle driving and perform an update at that time through communication with the core orchestrator 2000. Accordingly, it is possible to perform mixed operation of microservices.

Meanwhile, in response to executing a first application and a second application, the vehicle orchestrator 2010 or the core orchestrator 2000 can be configured to execute, update, or terminate the second application based on sensor data corresponding to the first application.

In this case, the first application is an application that is executed within the vehicle, and the second application can be an application that is downloaded and executed via an external server 400 or the like.

For example, the vehicle orchestrator 2010 can be configured to monitor vehicle speed data based on an application related to vehicle speed, and, while executing a vehicle light application, terminate the vehicle light application in resposne to the vehicle speed data being equal to or above a predetermined value.

Specifically, the vehicle orchestrator 2010 can be configured to execute a vehicle light application for controlling vehicle lights while the vehicle is stopped. In this case, the vehicle light application can be received and installed via an external server 400 or the like.

Meanwhile, the vehicle orchestrator 2010 can be configured to monitor vehicle speed data based on an application related to vehicle speed, while executing a vehicle light application, and can be configured to terminate the vehicle light application for safety purposes if the vehicle is in motion as the ignition of the vehicle is turned on. Accordingly, it is possible to manage related applications or microservices while executing an application.

Meanwhile, the vehicle orchestrator 2010 can be configured to monitor a microservice corresponding to the first application and execute, update, or terminate the second application based on the device resources.

For example, the vehicle orchestrator 2010 can be configured to monitor a microservice corresponding to a driver monitoring application which is an example of the first application, and can be configured to update a lane keeping application corresponding to an example of the second application, based on the device resources.

Specifically, while monitoring a microservice corresponding to the driver monitoring application, which is an example of the first application, the vehicle orchestrator 2010 can be configured to update the lane keeping application, which is an example of the second application, if the device resources are sufficient and therefore the utilization of the device resources is below a predetermined percentage. Accordingly, it is possible to manage related applications or microservices while executing an application.

In another example, the vehicle orchestrator 2010 can be configured to monitor a microservice corresponding to the driver monitoring application, which is an example of the first application, and execute the lane keeping application, which is an example of the second application, based on the device resources.

That is, the vehicle orchestrator 2010 can be configured to execute the lane keeping application while executing the driver monitoring application. Accordingly, it is possible to manage related applications or microservices while executing an application.

Meanwhile, when the first application and the second application be executed, the vehicle orchestrator 2010 can control a microservice of the first application or a microservice of the second application based on the device resources and communication nodes. Accordingly, it is possible to manage related applications or microservices while executing an application.

Meanwhile, the vehicle orchestrator 2010 can be configured to perform management of the gateway 2005 and node management of the worker node 2110 and the master node 2105.

To this end, as shown in FIG. 11, the vehicle orchestrator 2010 can be configured to execute the node agent 2114 for managing the gateway 2005 and managing the worker node 2110 and the master node 2105.

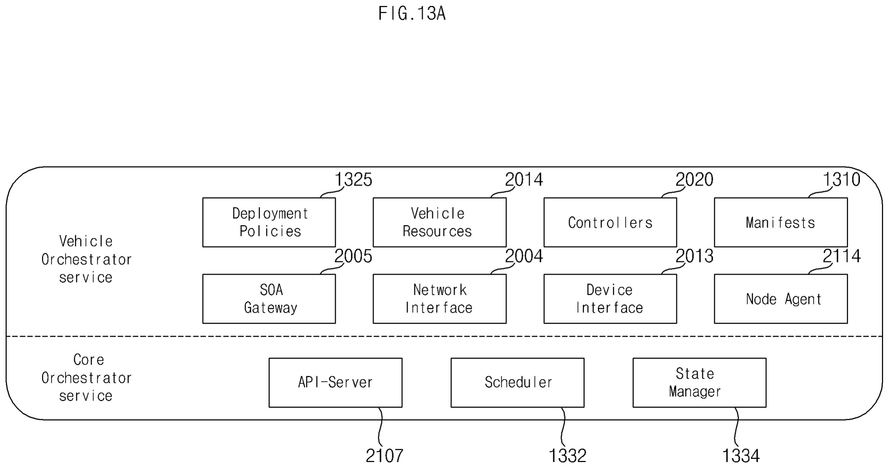

FIGS. 13A to 19D are diagrams referenced in the description of FIG. 12.

FIG. 13A is a diagram illustrating a core orchestrator service and a vehicle orchestrator service.

Referring to the drawing, the core orchestrator service performs real-time services related to fast execution, immediate response, etc., and the vehicle orchestrator service can be configured to perform functional safety services of microservices being executed, such as fail-safe, monitoring, authentication, etc.

Meanwhile, the core orchestrator 2000 can be configured to execute or include the core orchestrator service, and the vehicle orchestrator 2010 can be configured to execute or include the vehicle orchestrator service.

Meanwhile, the core orchestrator service can include fixed components, etc., and the vehicle orchestrator service can include variable components, etc.

Meanwhile, the core orchestrator 2000 can be configured to execute or include an API server 2017, a scheduler 1332, and a state manager 1334.

Meanwhile, the vehicle orchestrator 2010 can be configured to execute or include an SOA gateway 2005, a network interface 2004, a device interface 2013, a node agent 2114, deployment policies 1325, vehicle resources 2014, controllers 2020, manifests 1310, a global scheduler, etc.

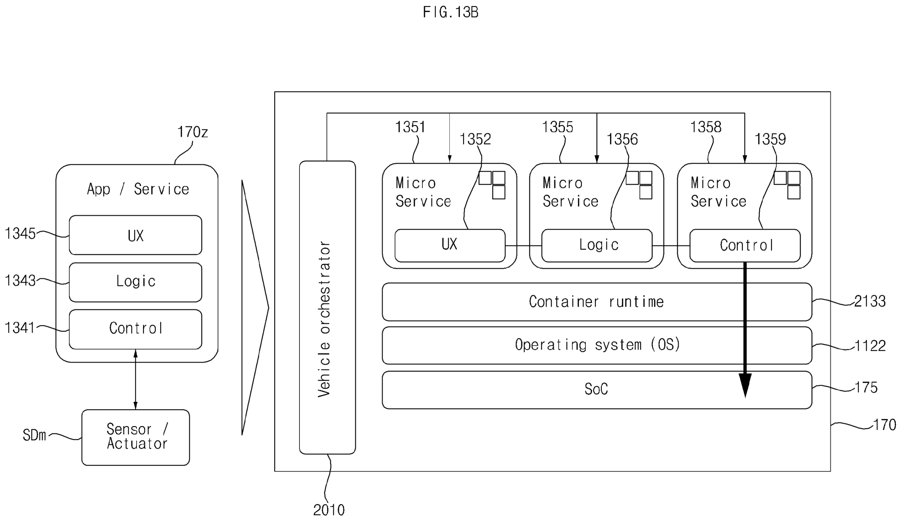

FIG. 13B illustrates an example of an operation of a processor according to an embodiment of the present disclosure.

Referring to the drawing, the processor 175 can be configured to execute infotainment services 1322, vehicle driving assistance (ADAS) and autonomous driving (AD) services 1324, connectivity services 1326, power and body control services 1328, etc.

For example, the processor 175 can read or reference the manifests 1310 and execute a plurality of applications 1332, 1334, and 1336 or the like on the manifests 1310.

In this case, the manifests 1310 can include elements or information necessary for executing network or communication services 1312, infrastructure services 1314 such as hypervisors or virtual machines, service manifests 1315, real-time or safety-critical services 1319, access permission services 1318 related to devices or resources, or configuration services 1317.

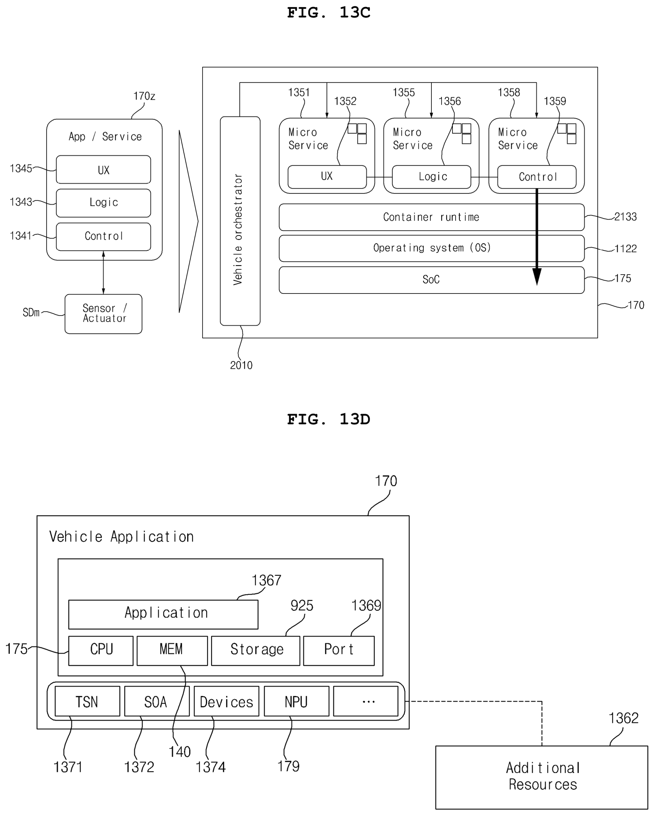

FIG. 13C illustrates an example of operations of a local signal processing device and a central signal processing device.

Referring to the drawing, the local signal processing device 170z can receive sensor data from a sensor or actuator SDm and transmit the sensor data, etc. to the central signal processing device 170.

Meanwhile, the local signal processing device 170z can be configured to execute a control 1341, a logic 1343, a user interface 1345, etc., in order to execute an application or a service.

Meanwhile, the central signal processing device 170 can receive sensor data from the local signal processing device 170z, can be configured to execute the operating system 1122, the container runtime 2133, the core orchestrator 2000, and the vehicle orchestrator 2010 on the processor 175, and can be configured to execute a plurality of microservices 1351, 1355, and 1358 via the container runtime 2133 based on results of communication between the core orchestrator 2000 and the vehicle orchestrator 2010.

In this case, the plurality of microservices 1351, 1355, and 1358 can respectively execute a control 1359, a logic 1356, and a user interface 1352 which correspond to the control 1341, logic 1343, and user interface 1345 within the local signal processing device 170z.

Meanwhile, the third microservice 1358, among the first to third microservices 1351, 1355, and 1358, can control the operation of the processor 175.

FIG. 13D illustrates an example of an operation of a signal processing device.

Referring to the drawing, the signal processing device 170 can be configured to execute a vehicle application on TSN (Time Sensitive Networking) 1371, SOA 1372, a device 1374, or a neural network processor 179.

For example, the signal processing device 170 can be configured to execute an application 1367 via the processor 175, the memory 140, the storage device 925, or a port 1369.

Meanwhile, the signal processing device 170 can also execute the application 1367 based on additional resources 1362.

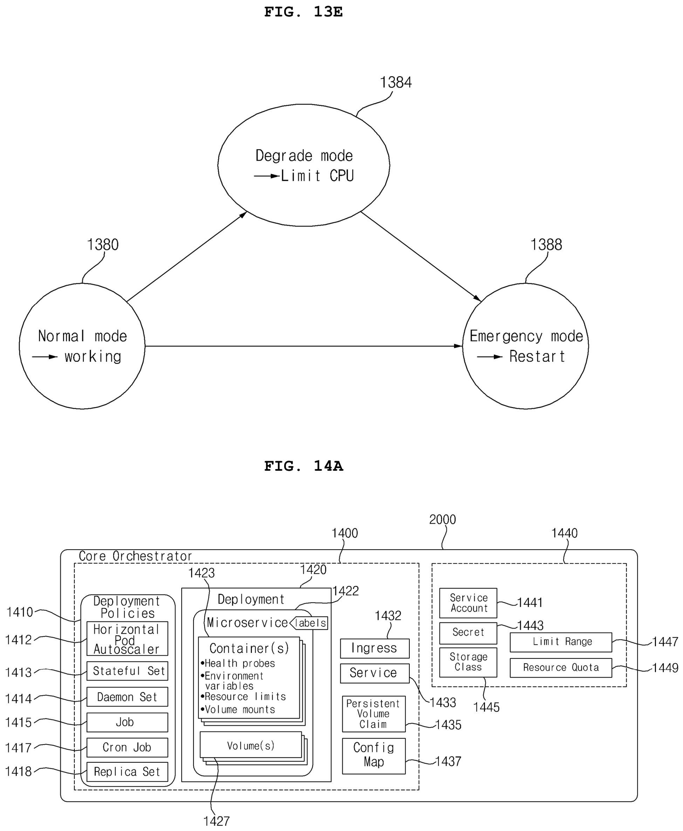

FIG. 13E illustrates various modes of an application.

Referring to the drawing, an application executed on the processor 175 within the signal processing device 175 can operate in normal mode 1380, degradation mode 1384, or emergency mode 1288.

For example, the processor 175 according to an embodiment of the present disclosure can restrict some operations of the processor 175 when the operation is transitioned from the normal mode 238 to the degradation mode 1384.

Meanwhile, the operation can be transitioned from the degradation mode 1384 to the emergency mode 1288, and in such a case, the processor 175 can be restarted.

Meanwhile, the processor 175 can be restarted when the operation is transitioned from the normal mode 238 to the emergency mode 1288.

Meanwhile, the vehicle orchestrator 2010 within the processor 175 can be configured to perform safety management and fail safe mode management for vehicle safety.

For example, the vehicle orchestrator 2010 can be configured to perform fail safe mode management including monitoring and management of a first microservice corresponsing to a main microservice, and a second microservice corresponsing to a redundant microservice. Accordingly, it is possible to improve the stability of applications or microservices.

Meanwhile, in the event of a failure in the first microservice, the vehicle orchestrator 2010 can be configured to transmit a recovery command to the first microservice and an activation command is transmitted to the second microservice. Accordingly, it is possible to improve the stability of applications or microservices.

Meanwhile, the first microservice or the second microservice can be a safety monitor service. Accordingly, it is possible to perform mixed operation of microservices.

Meanwhile, the vehicle orchestrator 2010 can be configured to perform control such that a plurality of microservices for the safety monitor service are distributed, executed, or managed. Accordingly, it is possible to improve the stability of applications or microservices.

Meanwhile, the vehicle orchestrator 2010 can be configured to perform operation transition from the first microservice to the second microservice based on a monitoring score or an analysis score. Accordingly, it is possible to improve the stability of applications or microservices.

FIG. 14A illustrates an example of the core orchestrator.

Referring to the drawing, the core orchestrator 2000 can include an application part 1400 and a cluster part 1440.

The application part 1400 can include deployment policies 1400, deployment 1420, ingress 1432, service 1433, a persistent volume claim 1435, and a config map 1437.

The deployment policies 1400 can include a horizontal pod autoscaler 1412, a Stateful Set 1413, a Daemon Set 1414, Job 1415, Cron Job 1417, and a Replica Set 1418.

The deployment 1420 can include a volume(s) 1427 and a microservice 1422 related to a container(s).

Meanwhile, the microservice 1422 can include a container(s) based on environment variables, resource limits, etc.

Meanwhile, the cluster part 1440 can include a service account 1441, a secret service 1443, a storage class 1445, a limit range 1447, a resource quota 1449, etc.

Meanwhile, unlike FIG. 14A, some components within the core orchestrator 2000 can be included in the vehicle orchestrator 2010.

For example, the deployment policies 1400, the persistent volume claim 1435, the config map 1437, the ingress 1432, and the service 1433 can be provided not in the core orchestrator 2000, but within the vehicle orchestrator 2010.

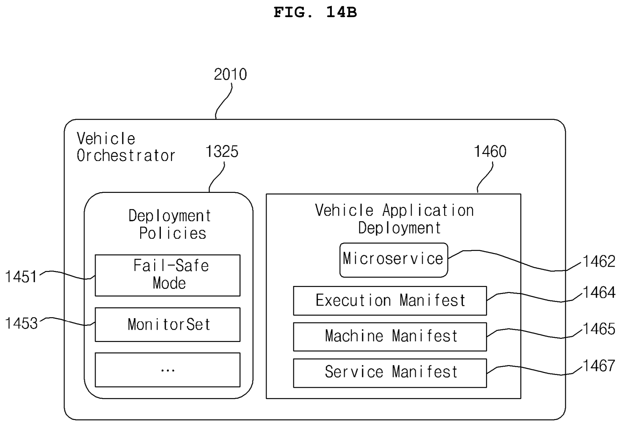

FIG. 14B illustrates an example of the vehicle orchestrator.

Referring to the drawing, the vehicle orchestrator 2010 can include deployment policies 1325 and vehicle application deployment 1460.

Meanwhile, the deployment policies 1325 can include a fail safe mode 1451, a monitor set 1453, passive-redundant, active-redundant, a shadow mode, CronJob, a DaemonSet, a StatefulSet, and a ReplicaSet.

Meanwhile, the vehicle application deployment 1460 can include an execution manifest 1464, a machine manifest 1465, and a service manifest 1467.

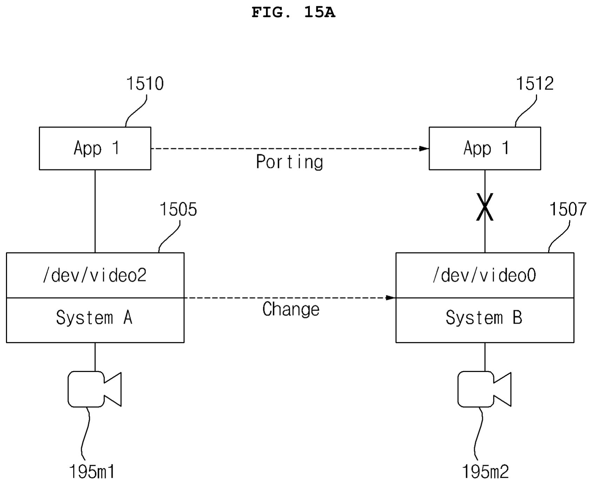

FIG. 15A is a diagram illustrating an example of execution of an application based on device resources.

Referring to the drawing, when the first application 1510 is operating based on data from a first device 1505, if the first application 1510 intends to operate based on data from a different device, i.e., a second device 1507, a device change or application porting needs to be performed.

In this case, the first device 1505 can be a first camera 195m1, and the second device 1507 can be a second camera 195m2.

In the case of heterogeneous devices, a device change or the like can not be easy.

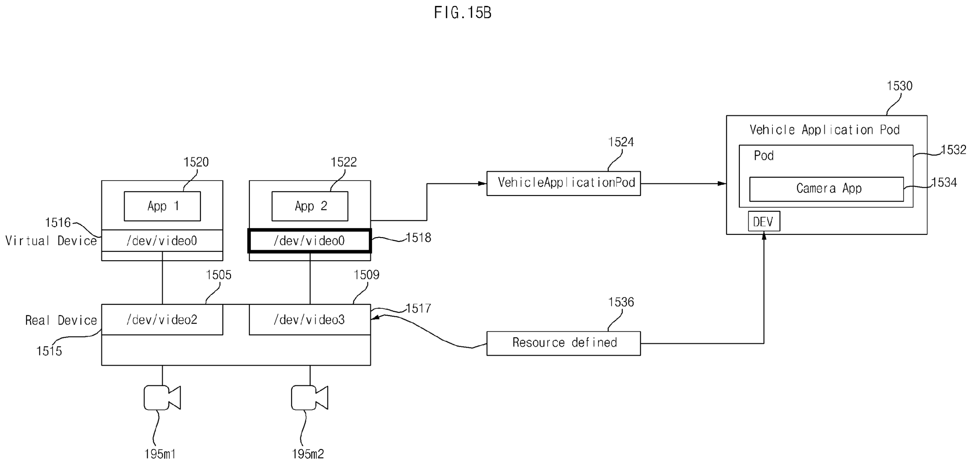

FIG. 15b is a diagram illustrating an example of execution of an application based on device resources according to an embodiment of the present disclosure.

Referring to the drawing, the first application 1520 can operate based on data from the first device 1505, and the second application 1522 can operate based on data from a different device, i.e., the second device 1509.

In this case, the first device 1505 can be a first camera 195m1, and the second device 1509 can be a second camera 195m2.

Meanwhile, the first device 1505 and the second device 1509 can be real devices 1515 and 1517.

Meanwhile, the processor 175 according to an embodiment of the present disclosure can be configured to execute a first virtual device 1516 corresponding to the first device 1505 when the first application 1520 is executed, and can be configured to execute a second virtual device 1518 corresponding to the second device 1509 when the second application 1522 is executed.

Meanwhile, the camera application 1534 within the vehicle application 1530 executed on the processor 175 can control the second device 1509 to operate based on information on configured or allocated resources 1536, and can receive camera data 1524 or the like from the second virtual device 1518.

That is, the vehicle orchestrator 2010 can control the second device 1509 to operate based on the information on configured or allocated resources 1536 information, and can control the camera application 1534 within the vehicle application 1530 to receive camera data 1524 or the like from the second virtual device 1518.

Accordingly, it is possible to reliably receive data from either the first device 1505 or the second device 1509.

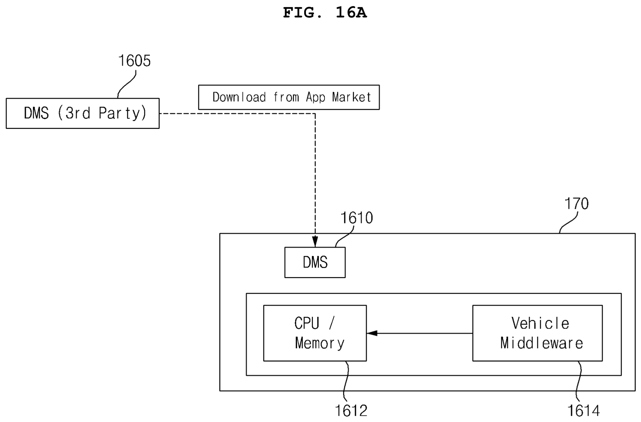

FIG. 16A illustrates an example of downloading of an application.

Referring to the drawing, the signal processing device 170 can receive an application such as a driver monitoring application 1605 from an external server or the like.

Further, the processor or memory 1612 within the signal processing device 170 can store the received application and execute the received application.

Accordingly, the signal processing device 170 is able to execute the driver monitoring application 1610.

However, the vehicle middleware 1614 executed within the processor 175 has the disadvantage that it can not be able to access the executed driver monitoring application 1610 due to a conflict or the like.

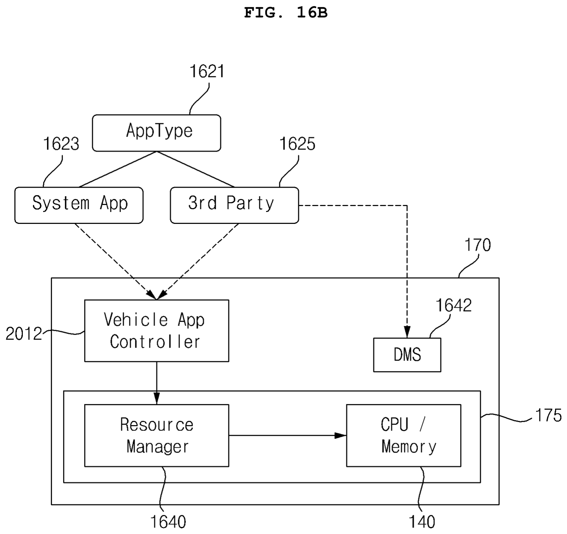

FIG. 16B illustrates another example of downloading of an application.

Referring to the drawing, applications can be classified into system applications 1623 and external applications 1625 according to the application type 1621 based on namespaces.

Meanwhile, the vehicle application controller 2012 within the signal processing device 170 can receive a system application 1623 and an external application 1625 from external sources.

Meanwhile, the resource manager 1640 within the processor 175 manages the resources of the processor 175 or memory 140.

Furthermore, the vehicle orchestrator 2010 within the processor 175 can be configured to execute a driver monitoring application 1642, which is an example of either the system application 1523 or the external application 1625, based on the resources of the processor 175 or memory 140.

In this case, unlike FIG. 16A, the driver monitoring application 1642, as an example of the external application 1625, can be accessed by other applications or microservices. Accordingly, it is possible to perform mixed operation of microservices.

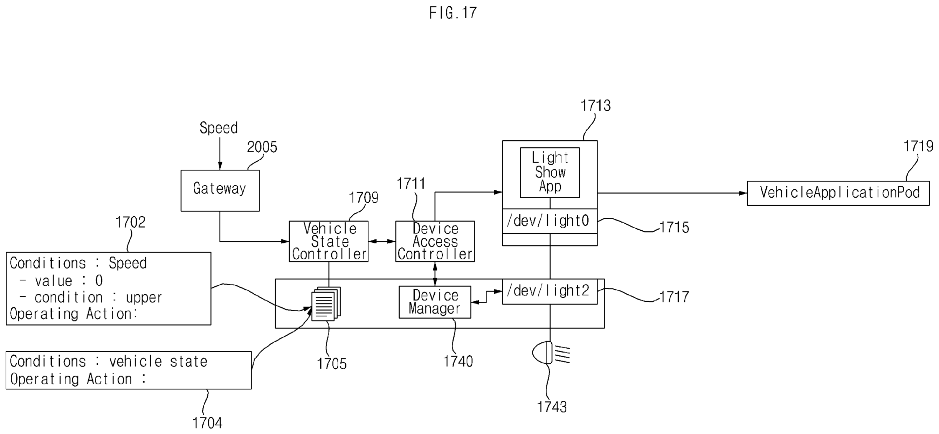

FIG. 17 illustrates an example of execution of a vehicle light application.

Referring to the drawing, the gateway 2005 within the processor 175 can receive speed data from a vehicle speed sensor or the like.

The vehicle state controller 1709 executed on the processor 175 can be configured to transmit the received speed data to the device access controller 1711, and the device access controller 1711 can be configured to transmit the speed data to the executed vehicle light application 1713.

Meanwhile, the vehicle light application 1713 can control a vehicle lamp 1743, which is an actual device 1717, through a virtual device 1715.

Additionally, the device manager 174 can control the actual device 1717.

For example, the vehicle light application 1713 can control the vehicle lamp 1743 so that the vehicle lights operate based on operation information 1702 indicating that the vehicle is stopped and the vehicle speed is zero.

As another example, the vehicle orchestrator 2010 can be configured to turn off the vehicle lights and terminate the vehicle light application 1713, based on operation information 1704 indicating that the vehicle is in motion and the vehicle speed data is equal to or above a predetermined value.

Meanwhile, the operation information 1702 indicating that the vehicle speed is zero and the operation information 1704 indicating that the vehicle speed data is equal to or above a predetermined value can be stored as separate files 1705 within the signal processing device 175.

Meanwhile, the vehicle light application 1713 can be managed as a vehicle application 1719.

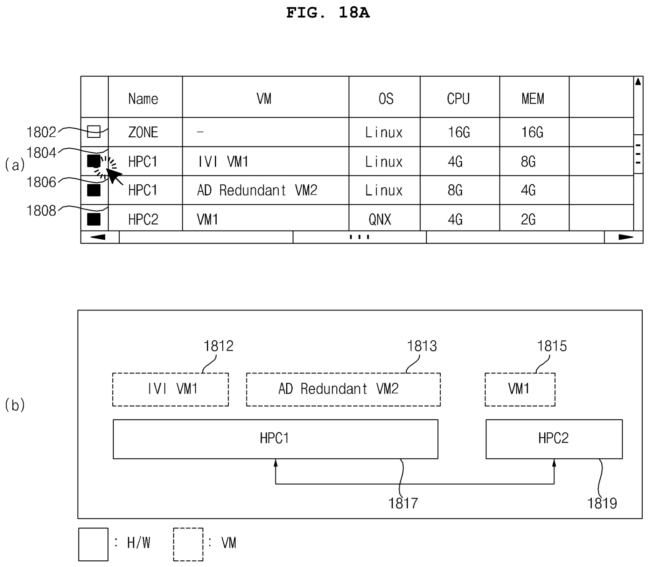

FIG. 18A illustrates an example of resources of multiple central signal processing devices and a local signal processing device.

Referring to the drawing, (a) of FIG. 18A illustrates that a local signal processing device 1802, a first central signal processing device (HPC1) 1804, a first central signal processing device (HPC1) 1806, and a second central signal processing device (HPC2) 1808 each execute an IVI virtualization machine, an autonomous driving virtualization machine, and a virtualization machine, and operate on a Linux operating system, a QNX operating system, etc.

Besides, the processor capacity, memory capacity, etc. for the first central signal processing device (HPC1) 1804, the first central signal processing device (HPC1) 1806, and the second central signal processing device (HPC2) 1808 are exemplified.

FIG. (b) of 18A illustrates a graphical representation of the items shown in (a) of FIG. 18A.

That is, the IVI virtualization machine item (IVI VM1) 1812 and the autonomous driving virtualization machine item 1813 are illustrated as being executed on a first central signal processing device (HPC1) 1817, while a virtualization machine item (VM1) 1815 is illustrated as being executed on a second central signal processing device (HPC2) 1819.

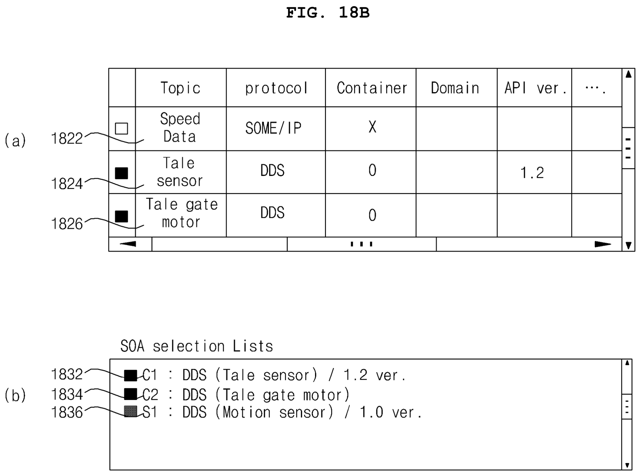

FIG. 18B illustrates a protocol, container, and API of each signal processing device.

Referring to the drawing, as shown in FIG. (a) of 18B, the local signal processing device 1822 can be exemplified as using a SOME/IP protocol but not using a container, the IVI virtualization machine of the first central signal processing device (HPC1) 1804 can be exemplified as using a tail sensor, a DDS protocol, a container, and API version 1.2, the autonomous driving virtualization machine of the first central signal processing device (HPC1) 1824 may be exemplified as using a tailgate motor, a DDS protocol, and a container, and the second central signal processing device (HPC2) 1826 can be exemplified as using a motion sensor, a DDS protocol, a container, and API version 1.0.

According to FIG. (a) of 18B, (b) of FIG. 18B illustrates an SOA selection list.

(b) of FIG. 18B illustrates a C1 item 1832 corresponding to the IVI virtualization machine of the first central signal processing device (HPC1) 1804, a C2 item 1834 corresponding to the autonomous driving virtualization machine of the first central signal processing device (HPC1) 1804, and an S1 item 1836 corresponding to the virtualization machine of the second central signal processing device (HPC2) 1808.

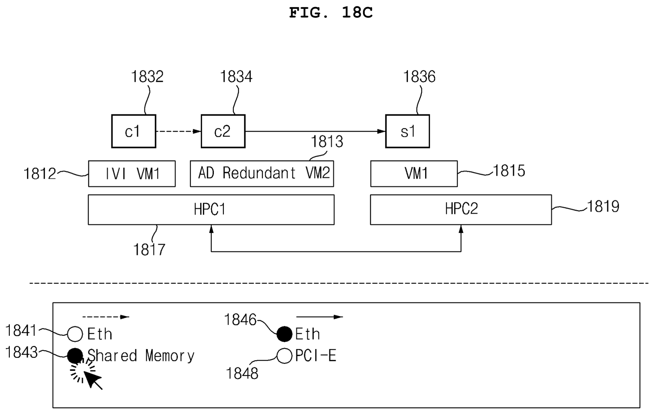

FIG. 18C illustrates a graphical user interface based on the configurations in FIGS. 18A and 18B.

Referring to the drawing, the processor 175 can be configured to perform control according to the configurations in FIGS. 18A and 18B such that the IVI virtualization machine item (IVI VM1) 1812 and the autonomous driving virtualization machine item 1813 are placed over the first central signal processing device (HPC1) item 1817, and such that the C1 item 1832 and the C2 item 1834 are placed over the IVI virtualization machine item (IVI VM1) 1812 and the autonomous driving virtualization machine item 1813.

Meanwhile, according to the configurations in FIGS. 18A and 18B, the processor 175 can place the IVI virtualization machine item (IVI VM1) 1812 over the second central signal processing device (HPC2) item 1819, and can place the S1 item 1836 over the IVI virtualization machine item (IVI VM1) 1812.

Meanwhile, the processor 175 can be configured to select a shared memory item 1843 as a method of communication between the C1 item 1832 and the C2 item 1834, from between an Ethernet item 1841 and the shared memory item 1843.

Meanwhile, the processor 175 can be configured to select an Ethernet item 1846 as a method of communication between the C2 item 1834 and the S1 item 1836, from between the Ethernet item 1846 and a PCI-E item 1848.

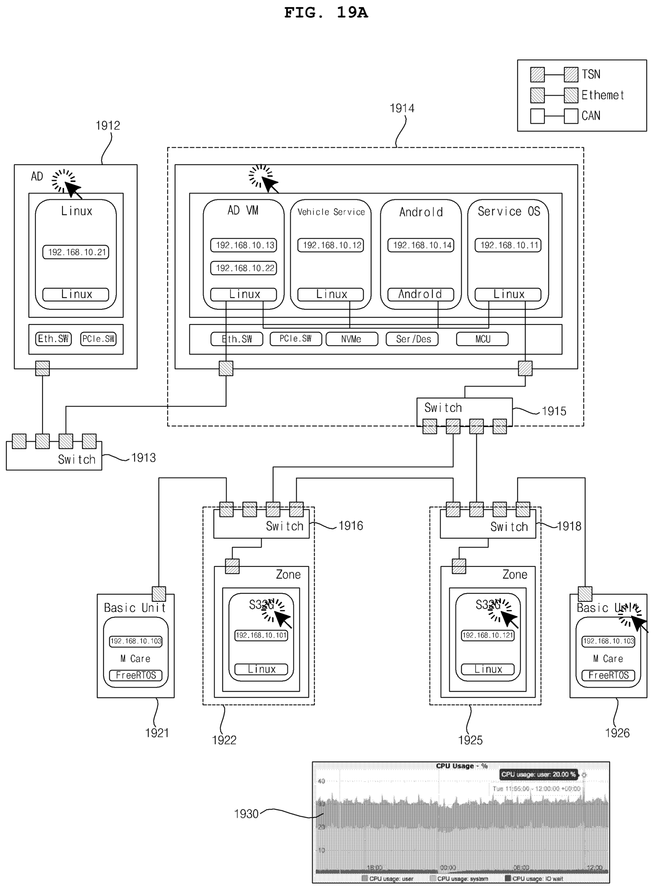

FIG. 19A is a diagram illustrating configurations among a plurality of signal processing devices.

Referring to the drawing, a first central signal processing device 1914 can be configured to execute an autonomous driving virtualization machine, vehicle services, an Android, and a service operating system.

The second central signal processing device 1912 can be configured to execute a Linux operating system for autonomous driving.

The first central signal processing device 1914 and the second central signal processing device 1912 are connected via an Ethernet switch 1913 and can be configured to perform Ethernet communication.

The first central signal processing device 1914 and a plurality of local signal processing devices 1922 and 1925 are respectively connected via switches 1915, 1916, and 1918, and can be configured to perform TSN communication.

Meanwhile, the first local signal processing device 1922 can be connected to the first base device 1921 via the switch 1916.

Meanwhile, the second local signal processing device 1925 can be connected to the second base device 1926 via the switch 1918.

Meanwhile, the graph 1930 in FIG. 19A can illustrate the utilization of the processor within each signal processing device.

Meanwhile, the vehicle orchestrator 2010 within the processor 175 according to one embodiment of the present disclosure can be configured to monitor inter-node communication status and the resources of the entire system, between a plurality of signal processing devices such as those shown in FIG. 19A.

Meanwhile, the vehicle orchestrator 2010 within the processor 175 according to one embodiment of the present disclosure can configure inter-node communication paths or resource allocation according to the settings. Accordingly, it is possible to perform mixed operation of microservices.

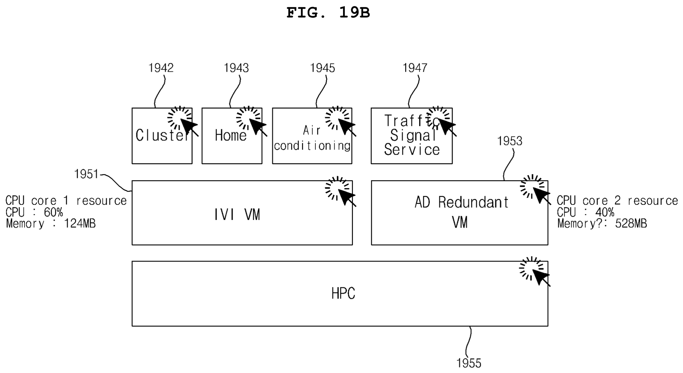

FIG. 19B illustrates a graphical user interface corresponding to the operation of a signal processing device.

Referring to the drawing, the processor 175 can be configured to perform control such that the IVI virtualization machine item 1951 and the autonomous driving virtualization machine item 1953 are placed over the signal processing device item 1955.

Meanwhile, the processor 175 can be configured to perform control such that a cluster item 1942, a home item 1943, and an air conditioning item 1945 are placed over the IVI virtualization machine item 1951, and that a traffic signal service item 1947 is placed over the autonomous driving virtualization machine item 1953.

In this case, 60% processor utilization and 124 MB of memory can be allocated for the IVI virtualization machine item 1951, and 40% processor utilization and 528 MB of memory can be allocated for the autonomous driving virtualization machine item 1953.

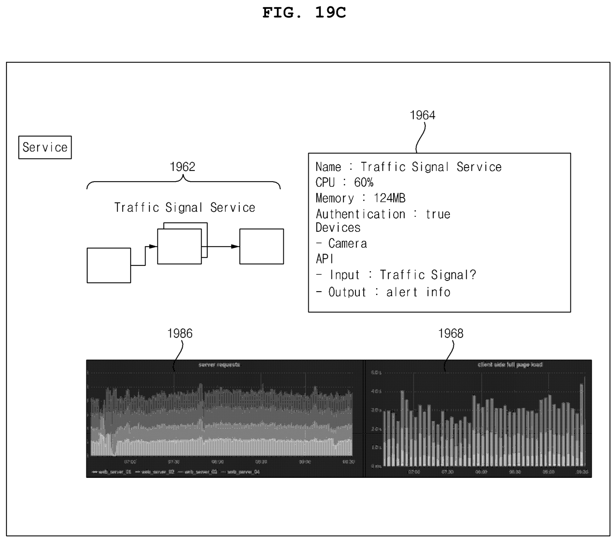

FIG. 19C illustrates a graphical user interface related to the traffic signal service item shown in FIG. 19B.

Referring to the drawing, the processor 175 can be configured to perform control such that a details item 1964 is displayed as the traffic signal service item 1962.

The details item 1964 can include processor utilization, memory capacity, an authentication method, devices, an API item, etc.

Meanwhile, the processor 175 can be configured to perform control such that a server request graph 1986, a load graph 1968, etc. are displayed in relation to the traffic signal service item 1962.

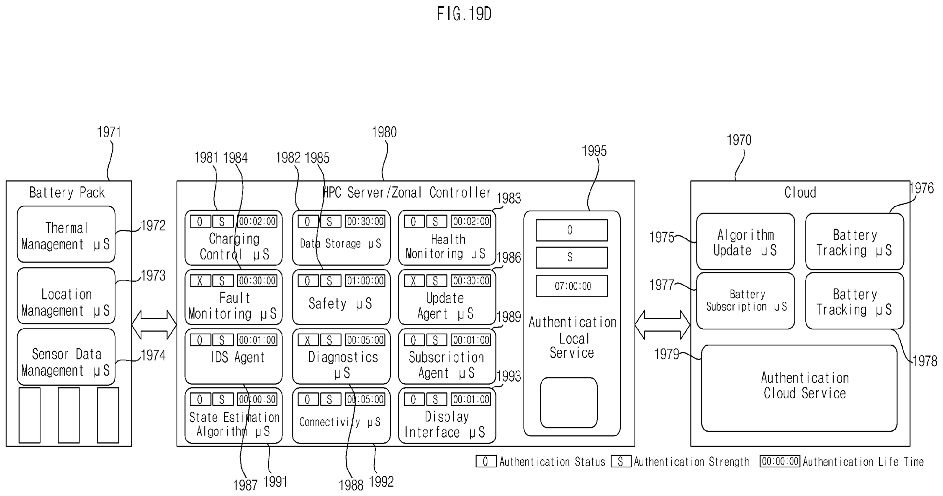

FIG. 19D illustrates a graphical user interface related to a signal processing system according to an embodiment of the present disclosure.

Referring to the drawing, the processor 175 can be configured to perform control such that in-vehicle battery pack information 1971, signal processing device information 1980, and server information 1970 are displayed.

The in-vehicle battery pack information 1971 can include temperature management information 1972, location management information 1973, sensor data management information 1974, etc.

The signal processing device information 1980 can include battery charging control information 1981, data storage device information 1982, device monitoring information 1983, fault monitoring information 1984, safety information 1985, update agent information 1986, IDS agent information 1987, diagnostics information 1988, subscription agent information 1989, state estimation algorithm information 1991, connectivity information 1992, display interface information 1993, or authentication service information 1995.

The sensor data management information 1974 can include algorithm update information 1975, battery tracking information 1976, battery subscription information 1977, battery tracking information 1978, or authentication service information 1979.

Through such a graphical user interface, it is possible to identify and perform mixed operation of applications or microservices in a complex environment.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to execute a core orchestrator and a vehicle orchestrator,
wherein the processor is configured to execute at least one application based on a container runtime, and the vehicle orchestrator is configured to perform monitoring and management of applications, microservices, and device resources based on communication with the core orchestrator.

2. The signal processing device of claim 1, wherein the vehicle orchestrator is configured to select and control a target application or a target microservice.

3. The signal processing device of claim 1, wherein the vehicle orchestrator is configured to perform partial connection or partial sharing between heterogeneous applications or heterogeneous microservices based on communication with the core orchestrator.

4. The signal processing device of claim 1, wherein the vehicle orchestrator is configured to set an update time for an executed application based on communication with the core orchestrator.

5. The signal processing device of claim 1, wherein the vehicle orchestrator is configured to set an update time for an executed application during vehicle driving.

6. The signal processing device of claim 1, wherein, in response to executing a first application and a second application, the vehicle orchestrator or the core orchestrator is configured to execute, update, or terminate the second application based on sensor data corresponding to the first application.

7. The signal processing device of claim 6, wherein the vehicle orchestrator is configured to monitor a microservice corresponding to the first application and to execute, update, or terminate the second application based on the device resources.

8. The signal processing device of claim 6, wherein, in response to executing the first and second applications, the vehicle orchestrator is configured to control a microservice of the first application or a microservice of the second application based on the device resources and communication nodes.

9. The signal processing device of claim 1, wherein the vehicle orchestrator is configured to monitor vehicle speed data based on an application related to vehicle speed and, while executing a vehicle light application, terminate the vehicle light application in response to the vehicle speed data being equal to or above a predetermined value.

10. The signal processing device of claim 1, wherein the vehicle orchestrator is configured to execute a lane keeping application while executing a driver monitoring application.

11. The signal processing device of claim 1, wherein the vehicle orchestrator is configured to update the lane keeping application, based on the device resources, while executing the driver monitoring application.

12. The signal processing device of claim 1, wherein the vehicle orchestrator is configured to perform gateway management and node management of a worker node and a master node.

13. The signal processing device of claim 1, wherein the vehicle orchestrator is configured to perform safety management and fail safe mode management for vehicle safety.

14. The signal processing device of claim 1, wherein the vehicle orchestrator is configured to perform fail safe mode management including monitoring and management of a first microservice corresponding to a main microservice, and a second microservice corresponding to a redundant microservice.

15. The signal processing device of claim 14, wherein, in the event of a failure in the first microservice, the vehicle orchestrator is configured to transmit a recovery command to the first microservice and transmit an activation command to the second microservice.

16. The signal processing device of claim 1, wherein the vehicle orchestrator is configured to distribute, execute, or manage a plurality of microservices for a safety monitoring service.

17. The signal processing device of claim 14, wherein the vehicle orchestrator is configured to perform operation transition from the first microservice to the second microservice based on a monitoring score or an analysis score.

18. A signal processing device comprising a processor configured to execute a core orchestrator and a vehicle orchestrator,
wherein the processor is configured to execute at least one application based on a container runtime, and the vehicle orchestrator is configured to perform partial connection or partial sharing between heterogeneous applications or heterogeneous microservices based on communication with the core orchestrator.

19. The signal processing device of claim 18, wherein, in response to executing a first application and a second application, the vehicle orchestrator or the core orchestrator is configured to execute, update, or terminate the second application based on sensor data corresponding to the first application.

20. A vehicle display device comprising:
at least one display; and
a signal processing device configured to output an image signal to the display,
wherein the signal processing device includes the signal processing device according to any one of claims 1 to 19.
